# EUROPEAN PATENT SPECIFICATION

(11) **EP 4 277 250 B1**
(45) Date of publication and mention of the grant of the patent: **17.09.2025**
(21) Application number: 22822839.1
(22) Date of filing: 12.12.2022
(51) Int. Cl.: H04M 1/02, H04M 1/72454, G06F 1/16, G06F 3/01, H04M 19/04, H04M 1/03

(54) **ELECTRONIC DEVICE COMPRISING DUAL VIBRATION MOTORS**
ELEKTRONISCHE VORRICHTUNG MIT ZWEI VIBRATIONSMOTOREN
DISPOSITIF ÉLECTRONIQUE COMPRENANT DES MOTEURS À DOUBLE VIBRATION

(30) Priority: 28.03.2022 KR 20220038321; 25.07.2022 KR 20220092076
(43) Date of publication of application: 15.11.2023
(73) Proprietor: Samsung Electronics Co., Ltd., Suwon-si, Gyeonggi-do 16677 (KR)
(72) Inventor: KANG, Jooyoung, Suwon-si Gyeonggi-do 16677 (KR); AHN, Sungho, Suwon-si Gyeonggi-do 16677 (KR); LEE, Junghyeob, Suwon-si Gyeonggi-do 16677 (KR); JUNG, Jihyung, Suwon-si Gyeonggi-do 16677 (KR); JUNG, Hojin, Suwon-si Gyeonggi-do 16677 (KR); CHO, Hyoungtak, Suwon-si Gyeonggi-do 16677 (KR); CHOI, Nakhyun, Suwon-si Gyeonggi-do 16677 (KR)
(74) Representative: Gulde & Partner
(86) International application number: PCT/KR2022/020170
(87) International publication number: WO 2023/191245

(56) References cited:
- WO-A1-2022/004908
- CN-A- 113 329 109
- JP-A- 2017 097 345
- KR-A- 20200 114 915
- KR-A- 20200 145 975
- KR-A- 20220 008 751
- US-A1- 2010 165 182
- US-A1- 2012 309 457
- US-A1- 2014 148 217
- US-A1- 2016 378 190
- US-A1- 2021 067 877

## Description

### [Technical Field]

Various embodiments relate to an electronic device including a dual vibration motor.

### [Background Art]

In order to secure portability and usability of an electronic device, a rollable display capable of providing a large screen display when necessary has been developed. The rollable display may refer to a flexible display, a foldable display, or a slidable display.

The electronic device may provide a haptic notification for notifying a user of an event related to the electronic device. For example, the electronic device may provide the haptic notification through a vibration motor.

Conventional devices are known from CN 113 329 109 A, JP 2017 097345 A and WO 2022/004908 A1.

### [Disclosure]

### [Technical Problem]

In a flexible display of an electronic device, for example, an area of the display may be expanded or contracted according to the movement of the housing. In order to expand or contract the size of the display area of the flexible display, the electronic device may have two or more housings movably coupled to each other. Since the position of a vibration motor is changed according to the movement of the housing, it may be difficult to transfer a haptic notification provided from the vibration motor.

The technical problems to be achieved in this document are not limited to those described above, and other technical problems not mentioned herein will be clearly understood by those having ordinary knowledge in the art to which the present disclosure belongs, from the following description.

### [Technical Solution]

An electronic device is provided as per the appended claims.

### [Advantageous Effects]

An electronic device according to an embodiment can include vibration motors disposed in each of the movably coupled housings. The electronic device according to an embodiment may provide a haptic notification to a user by controlling an operation of vibration motors based on a state of the electronic device.

The effects that can be obtained from the present disclosure are not limited to those described above, and any other effects not mentioned herein will be clearly understood by those having ordinary knowledge in the art to which the present disclosure belongs, from the following description.

### [Description of the Drawings]

FIG. 1 is a block diagram of an electronic device in a network environment according to various embodiments.
FIG. 2A is a front view of a first state of an electronic device according to an embodiment.
FIG. 2B is a rear view of a first state of an electronic device according to an embodiment.
FIG. 2C is a front view of a second state of an electronic device according to an embodiment.
FIG. 2D is a rear view of the second state of the electronic device according to an embodiment.
FIG. 3A is an exploded perspective view of an electronic device according to an embodiment.
FIG. 3B is a cross-sectional view of an electronic device according to an embodiment cut along A-A' of FIG. 2A.
FIG. 4 is a rear view of a first state and a second state of an electronic device according to an embodiment.
FIG. 5A is a rear view of an electronic device including a second vibration motor in a camera module according to an embodiment.
FIG. 5B is a cross-sectional view cut along B-B' of FIG. 5A.
FIG. 6A is a rear view of an electronic device including a second vibration motor in a speaker module according to an embodiment.
FIG. 6B illustrates an example of a speaker module of an electronic device according to an embodiment.
FIG. 6C illustrates another example of a speaker module of an electronic device according to an embodiment.
FIGS. 7A to 7C illustrate various examples of an electronic device according to an embodiment.
FIG. 7D is a cross-sectional view cut along C-C' of FIG. 7B.
FIG. 8A illustrates a use state of an electronic device according to an embodiment.
FIG. 8B is a block diagram of a sensor module of an electronic device according to an embodiment.
FIG. 9 illustrates an example of an operation in which an electronic device according to an embodiment provides haptic notification based on a state of the electronic device.
FIG. 10 illustrates a use state of an electronic device according to an embodiment.
FIG. 11 illustrates an example in which an electronic device according to an embodiment is placed on an external object.
FIG. 12 illustrates an example of an operation in which an electronic device according to an embodiment provides haptic notification based on a grip with respect to the electronic device and movement of the electronic device.
FIG. 13 illustrates a state according to movement distance of the second housing of the electronic device according to an embodiment.
FIG. 14 illustrates an example of an operation in which an electronic device according to an embodiment provides haptic notification based on movement distance of a second housing.

### [Mode for Invention]

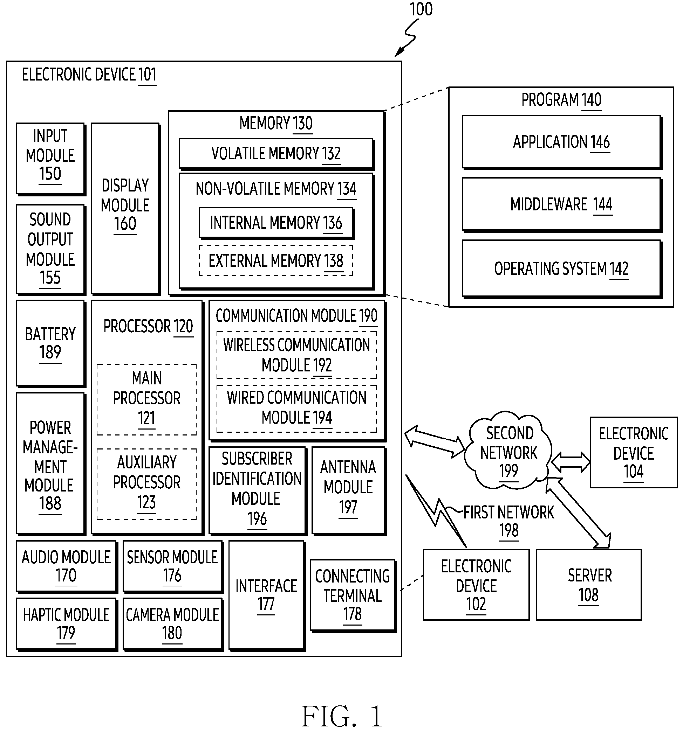

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

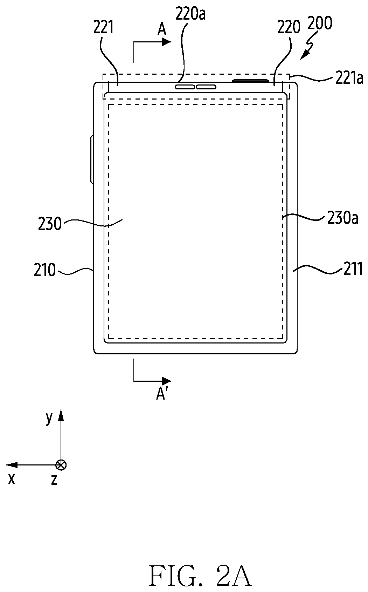

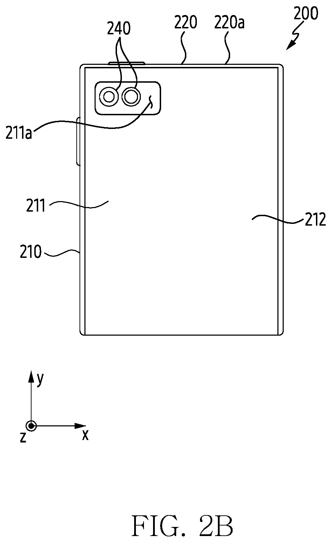

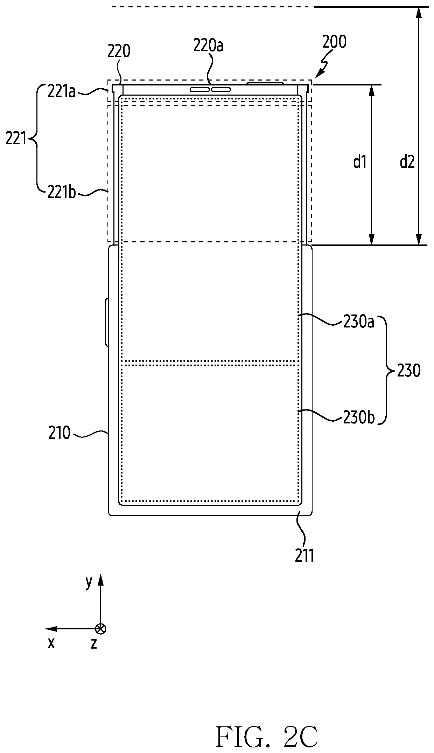

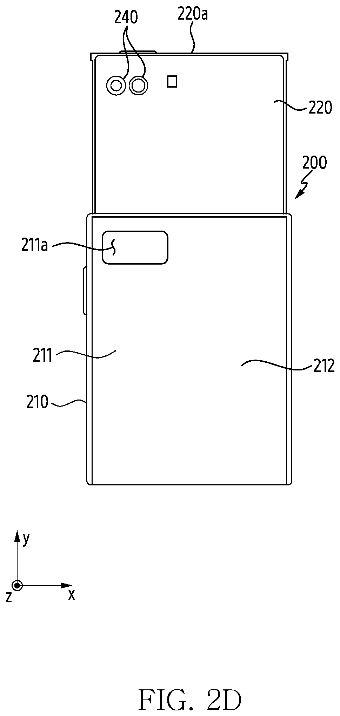

FIG. 2A is a front view of a first state of an electronic device according to an embodiment, FIG. 2B is a rear view of a first state of an electronic device according to an embodiment, FIG. 2C is a front view of a second state of an electronic device according to an embodiment, and FIG. 2D is a rear view of the second state of the electronic device according to an embodiment.

Referring to FIGS. 2A, 2B, 2C, and 2D, an electronic device 200 (e.g., the electronic device 101 in FIG. 1) may include a first housing 210, a second housing 220, a display 230 (e.g., the display module 160 in FIG. 1). The electronic device 200 may further include a camera module 240 (e.g., the camera module 180 in FIG. 1). According to an embodiment, the second housing 220 may be slidable with respect to the first housing 210. For example, the second housing 220 may move within a specified distance in a first direction (e.g., +y direction) with respect to the first housing 210. When the second housing 220 moves in the first direction, a distance between the side surface 220a of the second housing 220 facing the first direction and the first housing 210 may increase. For another example, the second housing 220 may move within a specified distance in a second direction (e.g., -y direction) opposite to the first direction with respect to the first housing 210. When the second housing 220 moves in the second direction, the distance between the side surface 220a of the second housing 220 facing the first direction and the first housing 210 may decrease. According to an embodiment, the second housing 220 may linearly reciprocate with respect to the first housing 210 by sliding relative to the first housing 210. For example, at least a part of the second housing 220 may be inserted into the first housing 210 or may be pulled out from the first housing 210.

According to an embodiment, the electronic device 200 may be referred to as a "slidable electronic device" as the second housing 220 is designed to be slidable with respect to the first housing 210. According to an embodiment, the electronic device 200 may be referred to as a "rollable electronic device" as at least a part of the display 230 is designed to be wound inside the second housing 220 (or the first housing 210) based on the slide movement of the second housing 220.

According to an embodiment, the first state of the electronic device 200 may be defined as a state in which the second housing 220 moves in the second direction (e.g., -y direction) (e.g., a contracted state or a slide-in state). For example, in the first state of the electronic device 200, the second housing 220 may be movable in the first direction but may not be movable in the second direction. In the first state of the electronic device 200, a distance between the side surface 220a of the second housing 220 and the first housing 210 may increase as the second housing 220 moves but may not decrease. For another example, in the first state of the electronic device 200, a part of the second housing 220 may be pulled out from the inside of the first housing 210, but may not be insertable. According to an embodiment, the first state of the electronic device 200 may be defined as a state in which a second part 230b of the display 230 is not visually exposed from the outside of the electronic device 200. For example, in the first state of the electronic device 200, the second part 230b of the display 230 may be located inside the inner space (not illustrated) of the electronic device 200 formed by the first housing 210 and/or the second housing 220, and may not be visible from the outside of the electronic device 200.

According to an embodiment, the second state of the electronic device 200 may be defined as a state in which the second housing 220 moves in the first direction (e.g., +y direction) (e.g., an extended state or a slide-out state). For example, in the second state of the electronic device 200, the second housing 220 may be movable in the second direction but may not be movable in the first direction. In the second state of the electronic device 200, a distance between the side surface 220a of the second housing 220 and the first housing 210 may decrease as the second housing 220 moves, but may not increase. For another example, in the second state of the electronic device 200, a part of the second housing 220 may be inserted into the first housing 210, but may not be pulled out from the first housing 210. According to an embodiment, the second state of the electronic device 200 may be defined as a state in which the second part 230b of the display 230 is visually exposed from the outside of the electronic device 200. For example, in the second state of the electronic device 200, the second part 230b of the display 230 may be pulled out from the inner space of the electronic device 200 and visible from the outside of the electronic device 200.

According to an embodiment, when the second housing 220 moves in the first direction from the first housing 210, at least a part of the second housing 220 and/or the second part 230b of the display 230 may be pulled out from the first housing 210 by a length d1 corresponding to a movement distance of the second housing 220. According to an embodiment, the second housing 220 may reciprocate within a specified distance d2. According to an embodiment, the length d1 may have a size of 0 to a specified distance d2.

According to an embodiment, the state of the electronic device 200 may be convertible between the second state and/or the first state by manual operation by the user or automatic operation by a driving module (not illustrated) disposed inside the first housing 210 or the second housing 220. According to an embodiment, the driving module may trigger an operation based on a user input. According to an embodiment, the user input for triggering the operation of the driving module may include a touch input, a force touch input, and/or a gesture input through the display 230. According to another embodiment, the user input for triggering the operation of the driving module may include a sound input (voice input) or an input of a physical button exposed to the outside of the first housing 210 or the second housing 220. According to an embodiment, the driving module may be driven in a semi-automatic manner, in which an operation is triggered when a manual operation by a user's external force is detected.

According to an embodiment, the first state of the electronic device 200 may be referred to as a first shape, and the second state of the electronic device 200 may be referred to as a second shape. For example, the first shape may include a normal state, a contracted state, or a closed state, and the second shape may include an open state. According to an embodiment, the electronic device 200 may form a third state (e.g., an intermediate state) between the first state and the second state. For example, the third state may be referred to as a third shape, and the third shape may include a free stop state.

According to an embodiment, the display 230 may be visible (or viewable) from the outside through a front direction (e.g., -z direction) of the electronic device 200 to display visual information to the user. For example, display 230 may include a flexible display. According to an embodiment, the display 230 may be disposed in the second housing 220 and may be pulled out from the inner space (not illustrated) of the electronic device 200 or inserted into the inner space of the electronic device 200 according to the movement of the second housing 220. The inner space of the electronic device 200 may mean a space within the first housing 210 and the second housing 220 formed by combining the first housing 210 and the second housing 220. For example, in the first state of the electronic device 200, at least a part of the display 230 may be inserted by being rolled into the inner space of the electronic device 200. When the second housing 220 moves in the first direction while at least a part of the display 230 is inserted into the inner space of the electronic device 200, at least a part of the display 230 may be pulled out from the inner space of the electronic device 200. For another example, when the second housing 220 moves in the second direction, at least a part of the display 230 may be inserted into the inner space of the electronic device 200 by being rolled into the electronic device 200. As at least a part of the display 230 is pulled out or inserted, an area of the display 230 visible from the outside of the electronic device 200 may be expanded or contracted. According to an embodiment, the display 230 may include a first part 230a and a second part 230b.

According to an embodiment, the first part 230a of the display 230 may mean an area of the display 230 that is fixedly visible from the outside of the electronic device 200, regardless of whether the electronic device 200 is in the second state or the first state. For example, the first part 230a may mean a partial area of the display 230 that is not rolled into the inner space of the electronic device 200. According to an embodiment, when the second housing 220 moves, the first part 230a may move together with the second housing 220. For example, when the second housing 220 moves in the first or second direction, the first part 230a may move along the first or second direction to the front surface of the electronic device 200 together with the second housing 220.

According to an embodiment, the second part 230b of the display 230 may be connected to the first part 230a, and may be inserted into the inner space of the electronic device 200 or pulled out from the inner space of the electronic device 200 as the second housing 220 moves. For example, the second part 230b of the display 230 may be a part inserted into the inner space of the electronic device 200 in a rolled state, in the first state of the electronic device 200. The second part 230b of the display 230 may be inserted into the inner space of the electronic device 200 in the first state of the electronic device 200 and thus may not be visible from the outside. For another example, the second part 230b of the display 230 may be a part pulled out from the inner space of the electronic device 200 in the second state of the electronic device 200. The second part 230b of the display 230 may be visible from the outside of the electronic device 200 in the second state.

According to an embodiment, in the first state of the electronic device 200, the area of the display 230 visible from the outside of the electronic device 200 may include only the first part 230a of the display 230. In the second state of the electronic device 200, the area of the display 230 visible from the outside of the electronic device 200 may include at least a part of the first part 230a and the second part 230b of the display 230.

According to an embodiment, the first housing 210 of the electronic device 200 may include a book cover 211 surrounding the inner space of the first housing 210 and a rear plate 212 surrounding the rear surface of the book cover 211. The second housing 220 of the electronic device 200 may include a front cover 221 covering the inner space of the electronic device 200.

According to an embodiment, the front cover 221 may include a first cover area 221a of the front cover 221 that is not inserted into the first housing 210 and a second cover area 221b that is inserted into the first housing 210 or pulled out from the first housing 210. Regardless of whether the electronic device 200 is in the second state or the first state, the first cover area 221a of the front cover 221 may always be visible. According to an embodiment, at least a part of the first cover area 221a of the front cover 221 may form a side surface 220a of the second housing 220. According to an embodiment, the second cover area 221b of the second housing 220 may not be visible in the first state but may be visible in the second state.

The camera module 240 may obtain an image of a subject based on receiving light from the outside of electronic device 200. According to an embodiment, the camera module 240 may include one or a plurality of lenses, an image sensor, and/or an image signal processor. According to an embodiment, the camera module 240 may be disposed in the second housing 220 to face the rear of the electronic device 200 opposite to the front of the electronic device 200 in which the first part 230a of the display 230 is disposed. For example, the camera module 240 may be disposed on the front cover 221 of the second housing 220 and may be visible from the outside of the electronic device 200 through an opening 211a formed in the book cover 211, when the electronic device 200 is in the first state. For another example, the camera module 240 may be disposed on the front cover 221 of the second housing 220 and may not be visible outside the electronic device 200 by being covered by the book cover 211 and/or the rear plate 212, when the electronic device 200 is in the first state.

According to an embodiment, the camera module 240 may include a plurality of cameras. For example, the camera module 240 may include a wide-angle camera, an ultra-wide-angle camera, a telephoto camera, a proximity camera, and/or a depth camera. However, the camera module 240 is not necessarily limited to including a plurality of cameras, and may include one camera.

According to an embodiment, the camera module 240 may further include a camera (not illustrated) facing the front of the electronic device 200 in which the first part 230a of the display 230 is disposed. In case that the camera module 240 faces the front surface of the electronic device 200, the camera module 240 may be an under display camera (UDC) disposed under the display 230 (e.g., in +z direction from the display 230), but is not limited thereto.

According to an embodiment, the electronic device 200 may include a sensor module (not illustrated) and/or a camera module (not illustrated) disposed under the display 230. The sensor module may detect an external environment based on information (e.g., light) received through the display 230. According to an embodiment, the sensor module may include at least one of a receiver, a proximity sensor, an ultrasonic sensor, a gesture sensor, a gyro sensor, an atmospheric pressure sensor, a magnetic sensor, an acceleration sensor, a grip sensor, a color sensor, an infrared sensor (IR) sensor, a biometric sensor, a temperature sensor, a humidity sensor, a motor encoder, or an indicator. According to an embodiment, at least some sensor modules of the electronic device 200 may be visually exposed from the outside through a partial area of the display 230. According to an embodiment, the electronic device 200 may detect a pull-out length (e.g., d1) by using a sensor module. According to an embodiment, the electronic device 200 may generate pull-out information on a degree of pull-out detected by the sensor. For example, the electronic device 200 may detect and/or identify the degree of pull-out of the second housing 220 by using pull-out information. According to an embodiment, the pull-out information may include information on a pull-out length of the second housing 220.

According to an embodiment, the coupling shape of the first housing 210 and the second housing 220 is not limited to the shapes and coupling shown in FIGS. 2A, 2B, 2C, and 2D, and may be implemented by a combination and/or coupling of other shapes or components.

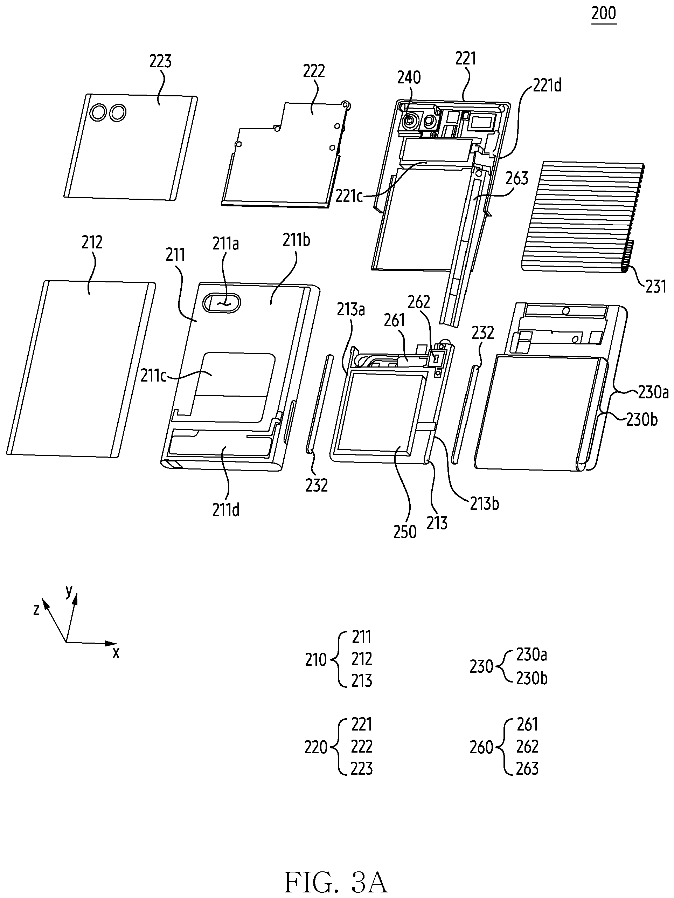

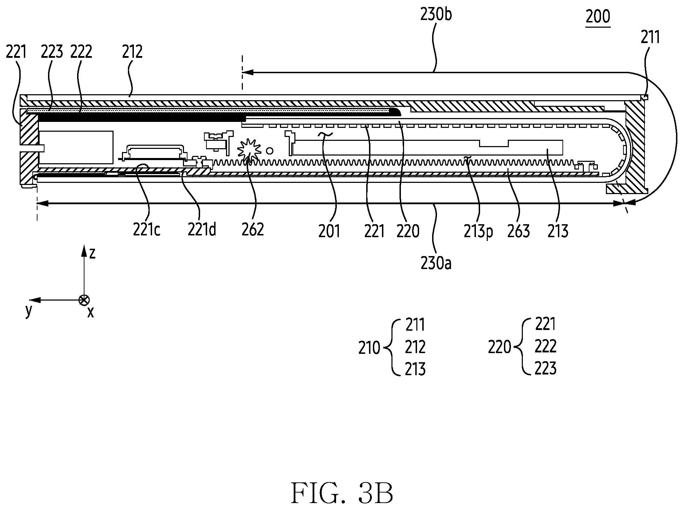

FIG. 3A is an exploded perspective view of an electronic device according to an embodiment, and FIG. 3B is a cross-sectional view of an electronic device according to an embodiment cut along A-A' of FIG. 2A.

Referring to FIG. 3A and FIG. 3B, according to an embodiment, the electronic device 200 may include a first housing 210, a second housing 220, a display 230, and a battery 250 (e.g., a battery 189 in FIG. 1), and a driving unit 260. The electronic device 200 may further include a camera module 240. According to an embodiment, the first housing 210 and the second housing 220 may be coupled to each other to form an inner space 201 of the electronic device 200. For example, in the first state of the electronic device 200, the second part 230b of the display 230 may be accommodated in the inner space 201.

According to an embodiment, the first housing 210 may include a book cover 211, a rear plate 212, and a frame cover 213. According to an embodiment, when the second housing 220 moves with respect to the first housing 210, the book cover 211, the rear plate 212, and the frame cover 213 included in the first housing 210 may be coupled to each other and may not move.

According to an embodiment, a book cover 211 may form at least a part of an outer surface of the electronic device 200. For example, the book cover 211 may form at least a part of the side surface of the electronic device 200 and at least a part of the rear surface of the electronic device 200. According to an embodiment, the book cover 211 may provide a surface on which the rear plate 212 is seated. The rear plate 212 may be seated on one surface 211b of the book cover 211.

According to an embodiment, a wireless charging antenna 211c may be disposed on a surface 211b of the book cover 211. The wireless charging antenna 211c may transmit the received power to the battery 250 based on receiving power from the outside of the electronic device 200. The power transmitted to the battery 250 may charge the battery 250. For example, the wireless charging antenna 211c may be referred to as a wireless power consortium (WPC) antenna, but is not limited thereto. According to an embodiment, at least a part of the book cover 211 may function as an antenna radiator by including a conductive material. For example, a part of the book cover 211 including a conductive material may be divided by another part of the book cover 211 including a non-conductive material to form the antenna radiator.

According to an embodiment, the printed circuit board 211d may be disposed on one surface 211b of the book cover 211. The printed circuit board 211d may electrically connect electronic components disposed on the book cover 211. According to an embodiment, the wireless charging antenna 211c and the printed circuit board 211d may be electrically connected to another printed circuit board (not illustrated) disposed on the front cover 221.

According to an embodiment, the frame cover 213 may support internal components of the electronic device 200. For example, the frame cover 213 may accommodate at least a part of the battery 250 or the driving unit 260. The battery 250 and the driving unit 260 may be accommodated in at least one of recesses or holes included in the frame cover 213. According to an embodiment, the frame cover 213 may be surrounded by the book cover 211. For example, in the first state of the electronic device 200, a surface 213a of the frame cover 213 on which the battery 250 is disposed may face at least a part of the book cover 211 and/or the second part 230b of the display 230. For another example, in the first state of the electronic device 200, the other surface 213b of the frame cover 213 facing the one surface 213a of the frame cover 213 may face the first part 230a of the display 230 or the front cover 221.

According to an embodiment, the second housing 220 may include a front cover 221, a rear cover 222, and a slide cover 223. According to an embodiment, when the second housing 220 moves relative to the first housing 210, the front cover 221, the rear cover 222, and the slide cover 223 may be coupled to each other and may move together with the second housing 220. The front cover 221 may support internal components of the electronic device 200. For example, the camera module 240 may be disposed on one surface 221c of the front cover 221 facing the inner space 201. The other surface 221d of the front cover 221 facing the one surface 221c of the front cover 221 may face the first part 230a of the display 230 when the electronic device 200 is in the first state. According to an embodiment, the rear cover 222 may be coupled to the front cover 221 to protect components of the electronic device 200 disposed on the front cover 221. For example, the rear cover 222 may cover a part of one surface 221c of the front cover 221. According to an embodiment, the slide cover 223 may be disposed on the rear cover 222 (e.g., in +z direction) to form an outer surface of the electronic device 200 together with the rear plate 212 and the book cover 211. The slide cover 223 may be coupled to one surface of the rear cover 222 to protect the rear cover 222 and/or the front cover 221.

According to an embodiment, when the electronic device 200 is in the first state, the display 230 may be bent by at least partially being rolled into the inner space 201. According to an embodiment, the display 230 may cover at least a part of the frame cover 213 and at least a part of the front cover 221. For example, when the electronic device 200 is in the first state, the display 230 may cover the other surface 221d of the front cover 221 and may be extended toward the inner space 201 by passing between the front cover 221 and the book cover 211. The display 230 may surround the frame cover 213 after passing between the front cover 221 and the book cover 211. The display 230 may cover one surface 213a of the frame cover 213 in the inner space 201. According to an embodiment, when the second housing 220 moves in the first direction, the second part 230b of the display 230 may be pulled out from the inner space 201. For example, as the second housing 220 moves in the second direction, the display 230 may pass between the front cover 221 and the book cover 211 and be pulled out from the inner space 201.

According to an embodiment, the first part 230a of the display 230 may be in contact with the other surface 221d of the front cover 221. For example, the first part 230a may be extended parallel to the other surface 221d of the front cover 221 while contacting the other surface 221d of the front cover 221. The first part 230a may have a substantially planar shape by extending parallel to the other surface 221d of the front cover 221. According to an embodiment, the first part 230a of the display 230 may not be deformed according to the movement of the second housing 220. For example, as the second housing 220 moves, the first part 230a may move while maintaining the planar shape.

According to an embodiment, the second part 230b of the display 230 may be deformed according to the movement of the second housing 220. For example, when the electronic device 200 is in the first state, at least a part of the second part 230b may be bent in the inner space 201 of the electronic device 200. When the second housing 220 moves in the first direction (e.g., +y direction), at least a part of the second part 230b may be pulled out from the inner space 201 of the electronic device 200 and may contact the other surface 221d of the front cover 221. When at least a part of the second part 230b contacts the other surface 221d of the front cover 221, at least a part of the second part 230b may have a planar shape on the other surface 221d of the front cover 221. For another example, when the second housing 220 moves in the second direction (e.g., -y direction), at least a part of the second part 230b may be inserted into the inner space 201 of the electronic device 200. At least a part of the second part 230b may be bent to have a curvature while being inserted into the inner space 201 of the electronic device 200.

According to an embodiment, the electronic device 200 may include a support bar 231 for supporting the display 230 and a guide rail 232. The support bar 231 may include a plurality of bars coupled to each other and may be manufactured in a shape corresponding to the shape of the second part 230b of the display 230. For example, the support bar 231 may include a plurality of bars extending in a third direction (e.g., +x direction) perpendicular to the first direction (e.g., +y direction). The support bar 231 may be disposed on the second part 230b of the display 230. According to an embodiment, as the display 230 moves, the support bar 231 may move together with the display 230. According to an embodiment, in the first state in which the second part 230b of the display 230 is wound in the inner space 201, the support bar 231 may be wound in the inner space 201 together with the second part 230b of the display 230. As the second housing 220 moves in the first direction, the support bar 231 may move together with the second area 230b of the display 230.

According to an embodiment, the guide rail 232 may guide the movement of the support bar 231. For example, as the display 230 moves, the support bar 231 may move along the guide rail 232 coupled to the frame cover 213. According to an embodiment, the guide rail 232 may include a plurality of guide rails 232 disposed to be spaced apart from each other at both peripheries of the frame cover 213 spaced apart from each other in a third direction substantially perpendicular to the first direction (e.g., +y direction).

According to an embodiment, the driving unit 260 may provide a driving force to the second housing 220 so that the second housing 220 may move relative to the first housing 210. According to an embodiment, the driving unit 260 may include a motor 261, a pinion gear 262, and a rack gear 263. The motor 261 may receive power from the battery 250 and provide a driving force to the second housing 220. According to an embodiment, the motor 261 may be disposed in the first housing 210 and may not move when the second housing 220 moves to the first housing 210. For example, the motor 261 may be disposed in a recess formed in the frame cover 213. According to an embodiment, the pinion gear 262 is coupled to the motor 261 and may be rotated by the driving force provided from the motor 261. According to an embodiment, the rack gear 263 may engage with the pinion gear 262 and move according to rotation of the pinion gear 262. For example, the rack gear 263 may reciprocate linearly in the first direction or the second direction according to the rotation of the pinion gear 262. According to an embodiment, the rack gear 263 may be disposed in the second housing 220. For example, the rack gear 263 may be coupled to the front cover 221 included in the second housing 220. According to an embodiment, the rack gear 263 may be movable inside the operating space 213p formed in the frame cover 213.

According to an embodiment, when the pinion gear 262 rotates along a first rotation direction (e.g., clockwise in FIG. 3B), the rack gear 263 may move in the first direction (e.g., +y direction). When the rack gear 263 moves along the first direction, the second housing 220 coupled to the rack gear 263 may move along the first direction. As the second housing 220 moves along the first direction, the area of the display 230 visible from the outside of the electronic device 200 may be expanded. When the pinion gear 262 rotates along a second rotation direction (e.g., counterclockwise in FIG. 3B), the rack gear 263 may move in the second direction (e.g., -y direction). When the rack gear 263 moves along the second direction, the second housing 220 coupled to the rack gear 263 may move along the second direction. As the second housing 220 moves along the second direction, the area of the display 230 visible from the outside of the electronic device 200 may be contracted.

In the above description, it has been described that the motor 261 and the pinion gear 262 are disposed in the first housing 210, and the rack gear 263 is disposed with the second housing 220, but embodiments are not limited thereto. According to embodiments, the motor 261 and the pinion gear 262 may be disposed in the second housing 220, and the rack gear 263 may be disposed in the first housing 210.

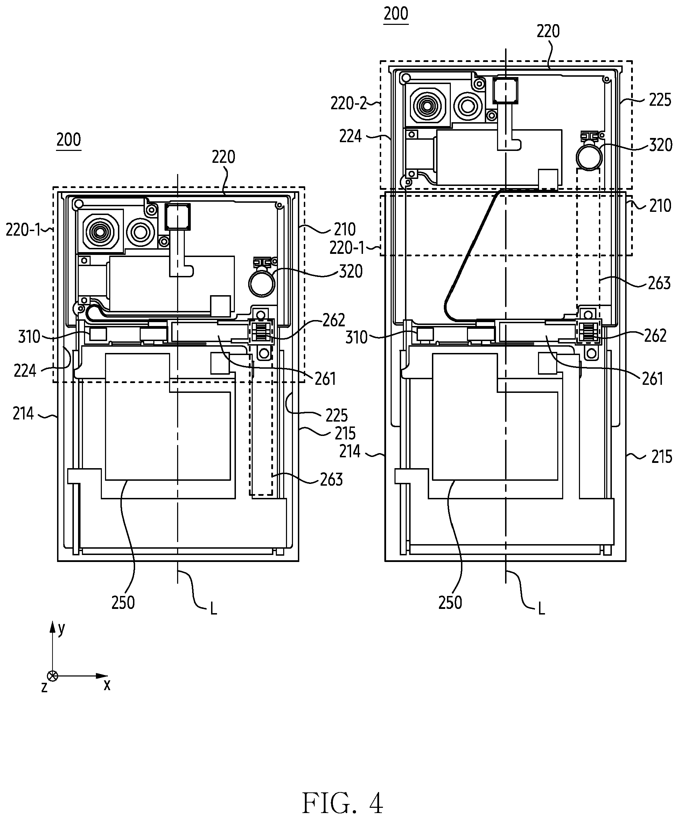

FIG. 4 is a rear view of a first state and a second state of an electronic device according to an embodiment.

Referring to FIG. 4, according to an embodiment, the electronic device 200 may include a first housing 210, a second housing 220 movably coupled to the first housing 210 in a first direction (e.g., +y direction) or in a second direction (e.g., -y direction) opposite to the first direction, a flexible display 230 disposed in the second housing 220 and expanded or contracted according to the movement of the second housing 220 (e.g., the display 230 of FIG. 3A), a first vibration motor 310 disposed in the first housing 210 and configured to provide vibration to the outside of the electronic device 200, a second vibration motor 320 disposed in the second housing 220 and configured to provide vibration to the outside of the electronic device 200, and at least one processor operatively coupled to the first vibration motor 310 and the second vibration motor 320 (e.g., the processor 120 of FIG. 1).

According to an embodiment, the second housing 220 may be movably (e.g., slidable or rollable) coupled to the first housing 210. According to an embodiment, the second housing 220 may be movably coupled to the first housing 210 in a first direction (e.g., +y direction) or in a second direction (e.g., -y direction) opposite to the first direction. The first housing 210 may be referred to the first housing 210 of FIGS. 2A to 3B, and the second housing 220 may be referred to the second housing 220 of FIGS. 2A to 3B.

According to an embodiment, the state of the electronic device 200 may be distinguished according to a relative position of the second housing 220 with respect to the first housing 210. According to an embodiment, a state in which the second housing 220 may be movable in the first direction (e.g., +y direction) and the second direction (e.g., -y direction) opposite to the first direction with respect to the first housing 210 may be defined as a first state. According to an embodiment, a state in which the second housing 220 may be movable in the second direction of the first direction and the second direction with respect to the first housing 210 may be defined as a second state. The first state and the second state may be substantially the same as the first state and the second state described with reference to FIGS. 2A to 2D.

According to an embodiment, in the flexible display 230, the display area may be expanded and/or contracted based on the movement of the second housing 220. For example, in the first state of the electronic device 200, a part of the flexible display 230 (e.g., the second part 230b of FIG. 3A) may be accommodated inside the first housing 210 and/or the second housing 220. As the state of the electronic device 200 is changed from the first state to the second state, a part of the flexible display 230 may be disposed on the first housing 210 and/or the second housing 220 to be exposed to the outside. According to an embodiment, the flexible display 230 may be configured to be inserted into the inside of the first housing 210 and/or the second housing 220 or to be pulled out from the inside of the first housing 210 and/or the second housing 220 Through a structure disposed on one side (e.g., a side in -y direction) of the electronic device 200, through a structure disposed on one side surface (e.g., a side surface in -y direction) of the electronic device 200.

According to an embodiment, the first vibration motor 310 and the second vibration motor 320 may refer to a device capable of converting an electrical signal into vibration. The vibration may mean a mechanical stimulus that a user may recognize through a tactile sense or a kinesthetic sense. The vibration motor is not simply limited to a device for generating vibration, but may refer to a device capable of transmitting mechanical stimulation through a medium. The first vibration motor 310 and the second vibration motor 320 may be configured to provide vibration to the outside of the electronic device 200 by vibrating.

According to an embodiment, the first vibration motor 310 may be disposed in the first housing 210, and the second vibration motor 320 may be disposed in the second housing 220. A distance between the first vibration motor 310 and the second vibration motor 320 may be changed according to the state of the electronic device 200. For example, the second vibration motor 320 may be spaced apart from the first vibration motor 310 by a first distance in the first direction (e.g., +y direction) within the first state, and the second vibration motor 320 may be spaced apart from the first vibration motor 310 by a second distance farther than the first distance in the first direction within the second state.

According to an embodiment, the first vibration motor 310 may provide vibration in a direction (e.g., +z direction and -z direction) perpendicular to a surface (e.g., x y plane) of the first housing 210 on which the first vibration motor 310 is disposed. For example, the first vibration motor 310 may include a vibrator that vibrates in the direction (e.g., +z direction and -z direction). The vibrator may provide vibration in the direction (e.g., +z direction and/or -z direction) by vibrating according to an electrical signal including an operation request.

According to an embodiment, the second vibration motor 320 may provide vibration in a horizontal direction (e.g., +y direction and -y direction, or +x direction and -x direction) to a surface (e.g., x y plane) of the second housing 220 on which the second vibration motor 320 is disposed. For example, the second vibration motor 320 may include a vibrator that vibrates in the above direction (e.g., +y direction and -y direction, or in the +x directions and -x direction). The vibrator may provide vibration in the above direction (e.g., +y direction and -y direction, or +x direction and -x direction) by vibrating according to an electrical signal including an operation request. However, the vibration type of the first vibration motor 310 and the second vibration motor 320 is not limited to the above description. For example, the first vibration motor 310 and the second vibration motor 320 may provide vibration in the same direction.

According to an embodiment, at least one processor may be operatively coupled to the first vibration motor 310 and the second vibration motor 320. At least one processor may be configured to control overall operations of the first vibration motor 310 and the second vibration motor 320.

According to an embodiment, at least one processor may be configured to identify at least one vibration motor for providing haptic notification for notifying an event related to the electronic device 200 of the first vibration motor 310 and the second vibration motor 320. For example, when a specific event assigned haptic notification through the first vibration motor 310 occurs, at least one processor may provide an electrical signal including a request for generating vibration to the first vibration motor 310 of the first vibration motor 310 or the second vibration motor 320. The first vibration motor 310 may provide haptic notification by vibrating in response to receiving the electrical signal. For another example, when a specific event in which haptic notification is assigned through both the first vibration motor 310 and the second vibration motor 320 occurs, at least one processor may provide an electrical signal including a request for generating vibration to both the first vibration motor 310 and the second vibration motor 320. The first vibration motor 310 and the second vibration motor 320 may provide haptic notification by vibrating in response to receiving the electrical signal. For another example, at least one processor may control the vibration pattern by providing an electrical signal such that the first vibration motor 310 and the second vibration motor 320 operate alternately with a specified time difference.

According to an embodiment, the first vibration motor 310 may be disposed at a position adjacent to a user's hand when the user grips the first housing 310. The first vibration motor 310 may be spaced apart from the battery 250 in the first direction (e.g., +y direction). The first vibration motor 310 may be disposed near the center with respect to the length of the first housing 210 in the first direction.

According to an embodiment, the first vibration motor 310 and the second vibration motor 320 may be spaced apart from each other to provide haptic notification to the entire area of the electronic device 200. Referring to FIG. 4, the first vibration motor 310 may be disposed on one side based on a virtual line L parallel to the first direction (e.g., +y direction) and passing through the centers of the first housing 210 and the second housing 220. The second vibration motor 320 may be disposed on the other side opposite to the one side with respect to the virtual line L. For example, the first vibration motor 310 may be disposed in -x direction based on the virtual line L. The second vibration motor 320 may be disposed in the +x direction based on the virtual line L. According to an embodiment, the first vibration motor 310 may be disposed close to the second periphery 215 of the first periphery 214 and the second periphery 215 of the first housing 210 parallel to the first direction (e.g., +y direction). In a first state that the second housing 220 may move in the first direction of a first direction (e.g., +y direction) and the second direction (e.g., -y direction) with respect to the first housing 210, the second vibration motor 320 may be disposed close to the third periphery 224 of the third periphery 224 of the second housing 220 facing the first periphery 214 and the fourth periphery 225 of the second housing 220 facing the second periphery 215. However, it is not limited thereto. For example, the first vibration motor 310 may be disposed close to the first periphery 214 of the first housing 210, and the second vibration motor 320 may be disposed close to the fourth periphery 224 of the second housing 220. According to an embodiment, in the first state, since the first vibration motor 310 and the second vibration motor 320 may be spaced apart from each other, they may be configured to provide haptic notification to the entire area of the electronic device 200.

The electronic device 200 according to an embodiment may include a battery 250, a motor 261, a pinion gear 262, and a rack gear 263. The motor 261, the pinion gear 262, and the rack gear 263 may be referred to as the motor 261, the pinion gear 262, and the rack gear 263 of FIG. 3A, respectively. The motor 261 and the pinion gear 262 may be disposed in the first housing 210. The rack gear 263 may be disposed in the second housing 220. However, it is not limited thereto.

According to an embodiment, the pinion gear 262 may be rotatably connected to the shaft of the motor 261 and may be rotated by the motor 261. The rack gear 263 fixed to the second housing 220 may engage with the pinion gear 262 and move according to rotation of the pinion gear 262. For example, the rack gear 263 may move in the first direction (e.g., +y direction) or the second direction (e.g., -y direction) according to the rotation of the pinion gear 262. The second housing 220 fixed to the rack gear 263 may move in the first direction (e.g., +y direction) or the second direction (e.g., -y direction) by movement of the rack gear 263. Since the contents of the motor 261, the pinion gear 262, and the rack gear 263 described in FIGS. 3A and 3B may be applied substantially the same to the motor 261, the pinion gear 262, and the rack gear 263 described below, overlapped descriptions will be omitted.

According to an embodiment, the first vibration motor 310 may be spaced apart from the battery 250 in the first direction (e.g., +y direction). For example, the first vibration motor 310 may be disposed at the upper end of the battery 250. According to an embodiment, the first vibration motor 310 may be spaced apart from the motor 261 in a second direction (e.g., -x direction) perpendicular to a first direction in the first housing 210. For example, the first vibration motor 310 may be disposed on one side in a horizontal direction with the motor 261. According to an embodiment, the second vibration motor 320 may be spaced apart from the rack gear 263 in the first direction (e.g., +y direction) in the second housing 220. For example, the second vibration motor 320 may be disposed at the upper end of the rack gear 263 in the second housing 220.

According to an embodiment, in a first state in which the second housing 220 may move in the first direction of the first direction (e.g., +y direction) and the second direction (e.g., -y direction) with respect to the first housing 210, the second vibration motor 320 may be disposed in the second housing 220 overlapping the first housing 210. For example, the second housing 220 may include a first area 220-1 overlapping the first housing 210 in the first state. In the first state, the second vibration motor 320 may be disposed in the first area 220-1.

According to an embodiment, as the state of the electronic device 200 is changed from the first state to the second state, a part of the second housing 220 may be disposed outside the first housing 210. According to an embodiment, in a second state in which the second housing 220 may move in the second direction of the first direction and the second direction with respect to the first housing 210, the second vibration motor 320 may be spaced apart from the first housing 210. For example, in the second state, the second housing 220 may include a first area 220-1 overlapping the first housing 210 and a second area 220-2 spaced apart from the first housing 210. In the second state, the second vibration motor 320 may be disposed in the second area 220-2.

According to an embodiment, the size of the first area 220-1 may be changed according to the state of the electronic device 200. For example, the size of the first area 220-1 in the second state may be smaller than the size of the first area 220-1 in the first state. According to an embodiment, since the size of the first area 220-1 may be changed according to the state of the electronic device 200, the vibration provided from the second vibration motor 320 to the user may be changed according to the state of the electronic device 200. For example, in case that the user grips the first housing 210 and uses the electronic device 200, the vibration force transmitted from the second vibration motor 320 to the first housing 210 may vary depending on the state of the electronic device 200. In the first state, since the size of the first area 220-1 is relatively large, the vibration provided from the second vibration motor 320 may be transmitted to the first housing 210 in a relatively large amount. In the second state, since the size of the second area 220-2 is relatively small, the vibration provided from the second vibration motor 320 may be transmitted to the first housing 210 in a relatively small amount.

According to an embodiment, Since the amount of vibration transmitted from the second vibration motor 320 may be reduced when the user uses the electronic device 200 in the second state, it may be difficult for the user to recognize haptic notification according to the occurrence of an event related to the electronic device 200. For example, when the state of charge (SOC) of the battery (e.g., the battery 250 of FIG. 3A) of the electronic device 200 is less than the specified reference value (e.g., less than 15% of the total capacity of the battery), at least one processor may be configured to provide haptic notification to a user through the second vibration motor 320. When the haptic notification is provided through the second vibration motor 320 while the user is using the electronic device 200 in the second state, the user may not recognize the haptic notification, and a situation in which the battery is discharged may occur.

The electronic device 200 according to an embodiment may provide haptic notification to a user through the first vibration motor 310 in the first housing 210 and the second vibration motor 320 in the second housing 220. When providing haptic notification for notifying an event related to the electronic device 200, at least one processor may be configured to provide the haptic notification by identifying at least one vibration motor of the first vibration motor 310 and the second vibration motor 320. Hereinafter, various embodiments may include an arrangement structure of the first vibration motor 310 and the second vibration motor 320 in the inner space of the first housing 210 and the second housing 220 movably coupled, and operations of the first vibration motor 310 and the second vibration motor 320 to provide the haptic notification to the user.

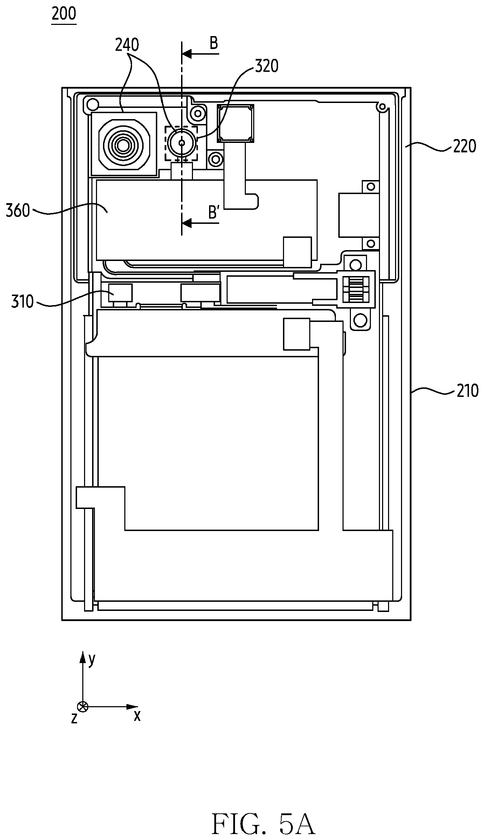

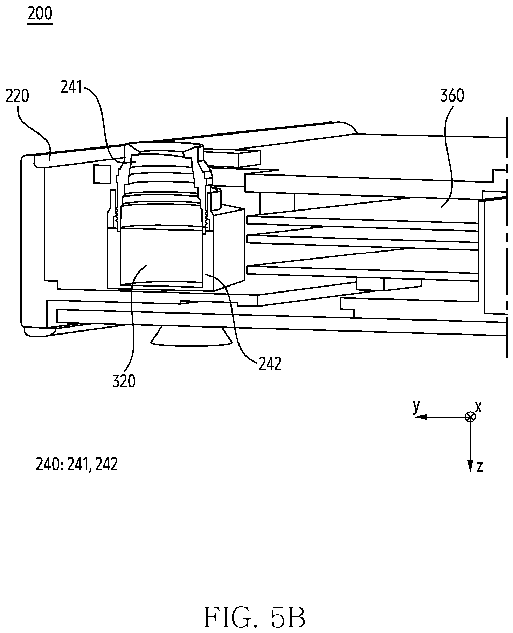

FIG. 5A is a rear view of an electronic device including a second vibration motor in a camera module according to an embodiment, and FIG. 5B is a cross-sectional view cut along B-B' of FIG. 5A.

Referring to FIG. 5A and FIG. 5B, according to an embodiment, an electronic device 200 may include a lens assembly 241 on the second vibration motor 320 configured to collect light emitted from a subject, and a camera module 240 accommodating the lens assembly 241 and the second vibration motor 320 and including a first bracket 242 fixed in the second housing 220. The camera module 240 may be referred to as the camera module 240 of FIGS. 2B, 2D, and 3A. According to an embodiment, the camera module 240 may include a lens assembly 241 and a first bracket 242. The lens assembly 241 may collect light emitted from a subject that is an object of image photographing. The lens assembly 241 may include one or more lenses. For example, the lens assembly 241 may include a wide-angle lens or a telephoto lens.

According to an embodiment, the first bracket 242 may be disposed in the second housing 220. In the second housing 220, the first bracket 242 may be mounted on a specified position, and may accommodate a camera including the lens assembly 241 and a second vibration motor 320 in the inner space. The lens assembly 241 and the second vibration motor 320 may occupy a fixed position in the second housing 220 through the first bracket 242. In addition, the first bracket 242 may further accommodate components for the operation of the camera module 240 such as a flash, an image sensor, and a signal processor.

Referring to FIG. 5B, in the first bracket 242 disposed in the second housing 220, the lens assembly 241 may be disposed on the second vibration motor 320. The second vibration motor 320 may be disposed under the lens assembly 241 (e.g., in +z direction with respect to the lens assembly 241). By stacking the lens assembly 241 and the second vibration motor 320 in +z direction, the inner space in the second housing 220 may be secured.

For example, referring to FIG. 5A, the electronic device 200 according to an embodiment may include a printed circuit board 360 disposed in the second housing 220. The printed circuit board 360 may include a plurality of conductive layers and a plurality of non-conductive layers stacked alternately with the conductive layers. The printed circuit board 360 may provide electrical connection between electronic components by using wires and conductive vias disposed on the conductive layer. According to an embodiment, since the second vibration motor 320 may be disposed under the lens assembly 241 in the first bracket 242, an inner space capable of mounting the printed circuit board 360 may be secured. According to an embodiment, since an inner space in the second housing 220 may be secured, the size of the printed circuit board 360 that may be disposed in the second housing 220 may be increased. As the size of the printed circuit board 360 increases, more electronic components may be electrically connected to the printed circuit board 360.

According to an embodiment, the second vibration motor 320 may provide vibration in a horizontal direction (e.g., +y direction and -y direction, or +x direction and -x direction) to a surface (e.g., x y plane of FIG. 5B) of the second housing 220 on which the second vibration motor 320 is disposed. Since the second vibration motor 320 may be disposed under the lens assembly 241 (e.g., in +z direction) when looking at the second housing 220 in +z direction, the lens assembly 241 may receive stress from the second vibration motor 320. For example, in case that the second vibration motor 320 is configured to provide vibration in a direction (e.g., +z and -z directions) perpendicular to a surface of the second housing 220, the second vibration motor 320 may apply physical stimulus to the lens assembly 241 by vibrating in a direction (e.g., +z direction and -z direction) perpendicular to the surface of the second housing 220. The lens assembly 241 may be mechanically damaged by receiving the physical stimulus from the second vibration motor 320. According to an embodiment, since the second vibration motor 320 is configured to provide vibrations in the horizontal direction (+y direction and -y direction, or +x direction and -x direction) to the surface (e.g., the x y plane of FIG. 5B) of the second housing 220, mechanical damage to the lens assembly 241 disposed on the second vibration motor 320 may be reduced.

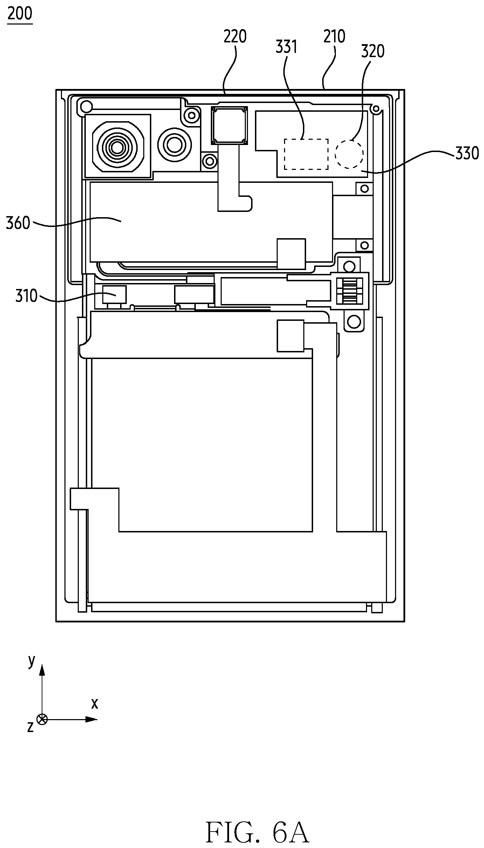

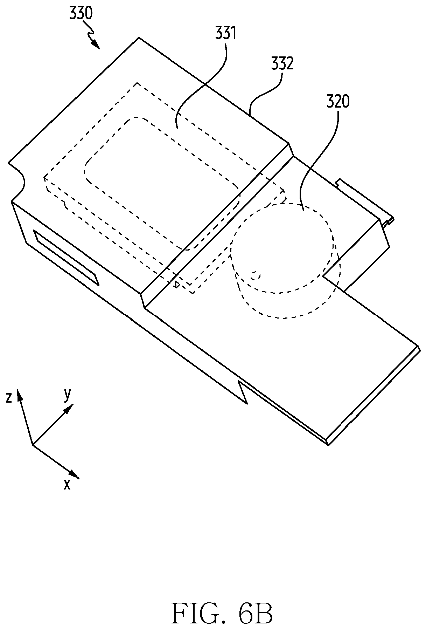

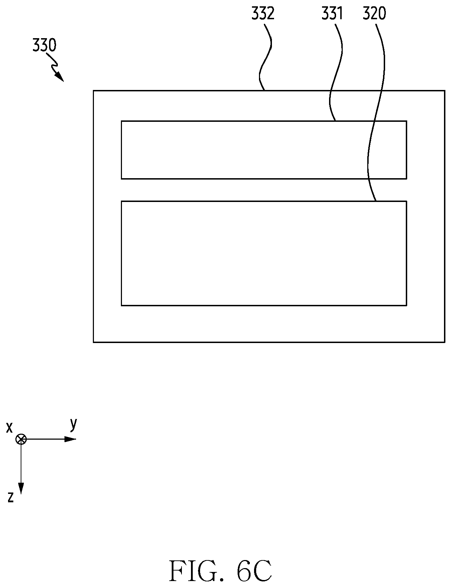

FIG. 6A is a rear view of an electronic device including a second vibration motor in a speaker module according to an embodiment. FIG. 6B illustrates an example of a speaker module of an electronic device according to an embodiment. FIG. 6C illustrates another example of a speaker module of an electronic device according to an embodiment.

Referring to FIGS. 6A and 6B, according to an embodiment, the electronic device 200 may include a speaker unit 331 configured to generate an audio signal, and a speaker module 330 accommodating the speaker unit 331 and the second vibration motor 320 and including a second bracket 332 fixed in the second housing 220.

According to an embodiment, the speaker module 330 may include a speaker unit 331 and a second bracket 332. The speaker unit 331 may output an audio signal through vibration. For example, the speaker unit 331 may include at least one voice coil that provides vibration to a vibration plate and a permanent magnet capable of forming a magnetic field. When a current with audio information flows through the voice coil, the permanent magnet and the voice coil may form a magnetic field. The voice coil may move by the action of the magnetic field by the permanent magnet and the magnetic field by the voice coil attracting or repulsing each other. An audio signal may be output by vibrating a vibration plate in response to the movement of the voice coil.

According to an embodiment, the second bracket 332 may be disposed in the second housing 220. The second bracket 332 may be mounted at a specified position within the second housing 220, and accommodate the speaker unit 331 and the second vibration motor 320 in the inner space. The speaker unit 331 and the second vibration motor 320 may occupy a fixed position in the second housing 220 through the first bracket 242.

Referring to FIG. 6B, the second vibration motor 320 and the speaker unit 331 may be disposed on a surface (e.g., x y plane) of the second housing 220 in which the speaker module 330 is disposed in the second bracket 332. For example, the second vibration motor 320 and the speaker unit 331 may be disposed side by side in the +x direction in the second bracket 332. Since the speaker unit 331 vibrates the vibration plate vertically (e.g., in +z direction and -z direction) to output an audio signal, the second vibration motor 320 may be disposed on the same surface to reduce the influence of the second vibration motor 320 on the audio signal generated from the speaker unit 331.

According to an embodiment, the second vibration motor 320 may provide vibration in a direction(e.g., +z direction and -z direction) perpendicular to the surface (e.g., x y plane) of the second housing 220 on which the second vibration motor 320 is disposed. When the second vibration motor 320 and the speaker unit 331 are disposed on the surface (e.g., x y plane) of the second housing 220 on which the speaker module 330 is disposed, in the second bracket 332, the second vibration motor 320 and the speaker unit 331 may vibrate in the same direction. Since the vibration plate of the speaker unit 331 and the second vibration motor 320 may vibrate on the same plane, the second vibration motor 320 and the speaker unit 331 may vibrate in the same direction so that the generated vibration is not offset. Since the speaker unit 331 vibrates the vibration plate vertically (e.g., in +z direction and -z direction) to output an audio signal, the second vibration motor 320 may vibrate in a direction (e.g., +z direction and -z direction) perpendicular to a surface (e.g., x y plane) of the second housing 220 in which the second vibration motor 320 is disposed. Since the second vibration motor 320 vibrates in a direction (e.g., +z direction and -z direction) perpendicular to the surface (e.g., x y plane) of the second housing 220, the influence of the vibration of the second vibration motor 320 on the audio signal output from the speaker unit 331 may be reduced.

Referring to FIG. 6C, the speaker unit 331 may be disposed on the second vibration motor 320 in the second bracket 332. When the speaker unit 331 is viewed in +z direction, the speaker unit 331 may be disposed on the second vibration motor 320 in the second bracket 332. The second vibration motor 320 may be disposed under the speaker unit 331 (e.g., in +z direction based on the speaker unit 331). By stacking the speaker unit 331 and the second vibration motor 320 in +z direction, the inner space of the second housing 220 may be secured.

According to an embodiment, the second vibration motor 320 may be configured to provide vibration in a horizontal direction (e.g., +y direction and -y direction, or +x direction and -x direction) on the surface of the second housing 220 on which the second vibration motor 320 is disposed. In case that the second vibration motor 320 and the speaker unit 331 are stacked in +z direction in the second bracket 332, the second vibration motor 320 may vibrate in a horizontal direction (e.g., +y direction and -y direction, or +x direction and -x direction) on the surface of the second housing 220 on which the second vibration motor 320 is disposed. Since the speaker unit 331 may receive physical stimulus by the vibration of the second vibration motor 320, the second vibration motor 320 may vibrate in a horizontal direction in the stacked direction. By vibrating the second vibration motor 320 in a horizontal direction (e.g., +y direction, or the +x direction and -x direction) on the surface (e.g., x y plane) of the second housing 220, mechanical damage to the speaker unit 331 may be reduced.

According to an embodiment, as the second vibration motor 320 is disposed in the second bracket 332, an inner space in the second housing 220 may be secured. For example, since the second vibration motor 320 may be disposed in the second bracket 332, the inner space capable of mounting the printed circuit board 360 in the second housing 220 may be secured. According to an embodiment, since the inner space in the second housing 220 may be secured, the size of the printed circuit board 360 that may be disposed in the second housing 220 may be increased. As the size of the printed circuit board 360 increases, more electronic components may be electrically connected to the printed circuit board 360.

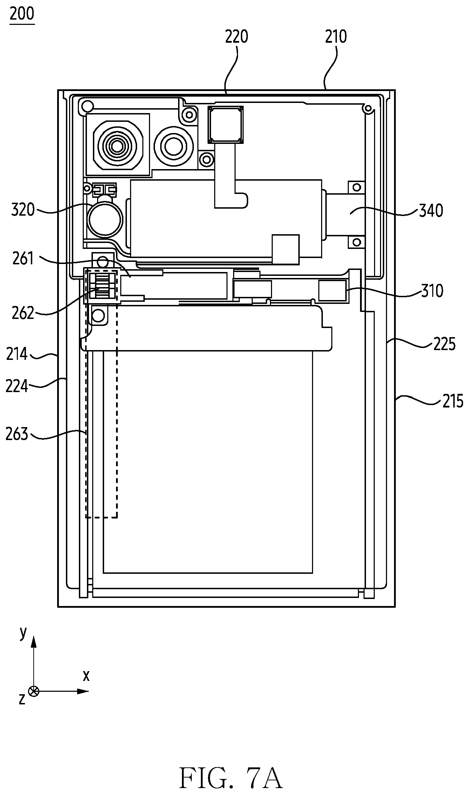

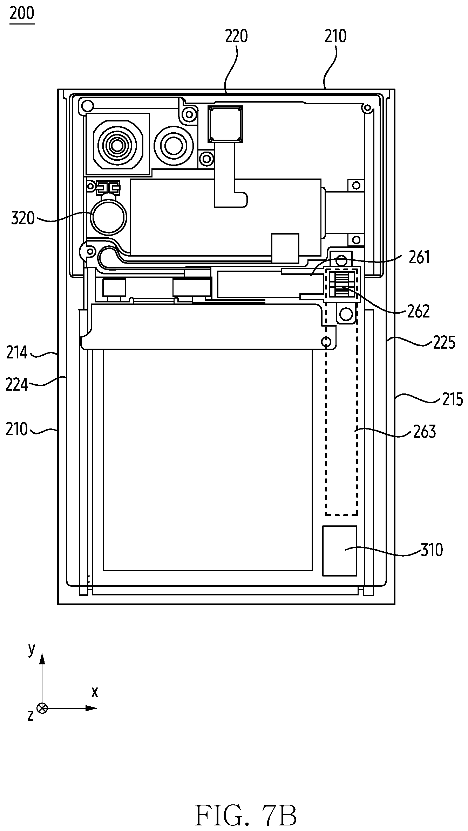

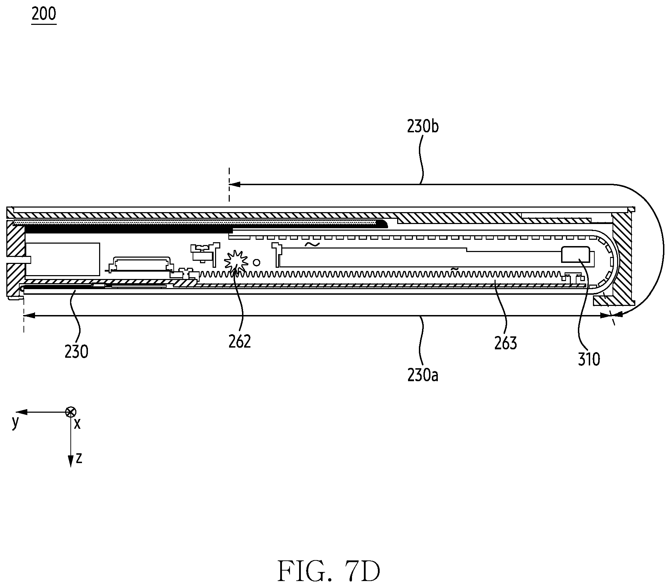

FIGS. 7A to 7C illustrate various examples of an electronic device according to an embodiment. FIG. 7D is a cross-sectional view cut along C-C' of FIG. 7B.

Referring to FIG. 7A, the electronic device 200 according to an embodiment may include a motor 261 disposed in the first housing 210 and supplying power to the second housing 220. The electronic device 200 may further include a pinion gear 262 disposed close to the first periphery 214 of the first periphery 214 and the second periphery 215 of the first housing 210 parallel to a first direction (e.g., +y direction) and rotatably connected to the shaft of the motor 261, and a rack gear 263 engaged with the pinion gear 262, moved by rotation of pinion gear 262, and fixed to second housing 220.

According to an embodiment, the first housing 210 may include a first periphery 214 and a second periphery 215 parallel to the first direction (e.g., +y direction). The first periphery 214 may be a periphery parallel to the first direction and disposed in -x direction, and the second periphery 215 may be a periphery parallel to the first direction and disposed in the +x direction. According to an embodiment, the pinion gear 262 may be disposed close to the first periphery 214 of the first periphery 214 and the second periphery 215 of the first housing 210 parallel to the first direction (e.g., +y direction). The first vibration motor 310 may be disposed close to the second periphery 215 of the first periphery 214 and the second periphery 215. According to an embodiment, the pinion gear 262 may be disposed close to the first periphery 214, and the first vibration motor 310 may be disposed close to the second periphery 215, thereby reducing interference with each other.

According to an embodiment, the second housing 220 may include a connector hole 340 to which a connector of an external electronic device may be connected. The connector hole 340 may be disposed close to the fourth periphery 225 of the third periphery 224 and the fourth periphery 225 of the second housing 220 parallel to the first direction (e.g., +y direction). According to an embodiment, the second vibration motor 320 may be disposed close to the third periphery 224 of the third periphery 224 and the fourth periphery 225. According to an embodiment, in the second housing 220, the second vibration motor 320 may be opposite to the connector hole 340.

According to an embodiment, in the first state, the first periphery 214 and the third periphery 224 may overlap each other. In the first state, the second periphery 215 and the fourth periphery 225 may overlap each other. The third periphery 224 may be a periphery parallel to the first direction (e.g., +y direction) and disposed in -x direction, and the fourth periphery 225 may be a periphery parallel to the first direction and disposed in the +x direction. The connector hole 340 may be disposed close to the fourth periphery 225 of the third periphery 224 and the fourth periphery 225 in the second housing 220, and the second vibration motor 320 may be disposed close to the third periphery 224 of the third periphery 224 and the fourth periphery 225 in the second housing 220. When the first vibration motor 310 and the second vibration motor 320 are disposed in one periphery of the electronic device (e.g., periphery in the +x direction), a deviation in vibration provided to the outside from the electronic device 200 may occur. According to an embodiment, since the first vibration motor 310 and the second vibration motor 320 may be disposed in opposite directions, the electronic device 200 may equally provide haptic notification to the user. Referring to FIG. 7A, in the first state, since the first vibration motor 310 and the second vibration motor 320 may be disposed on opposite sides from each other, the user may recognize haptic notification in the entire area of the electronic device 200.

According to an embodiment, the first vibration motor 310 may be disposed between an upper part (e.g., +y direction) and a lower part (e.g., -y direction) within the first housing 210. Referring to FIG. 7A, the first vibration motor 310 may be disposed closer to an end of the second periphery 215 in +y direction than the first periphery 214, at a position closer to the second periphery 215. Since a second part (e.g., the second part 230b of FIG. 7D) of the flexible display (e.g., the flexible display 230 of FIG. 7D) is inserted into the end in -y direction when the first vibration motor 310 is disposed close to the end of the second periphery 215 in +y direction, the thickness of the first housing 210 may be reduced.

Referring to FIG. 7B, the first vibration motor 310 may be disposed close to an end of the second periphery 215 in -y direction, at a position closer to the second periphery 215 of the first periphery 214 and the second periphery 215. When the first vibration motor 310 is disposed close to the end of the second periphery 215 in -y direction, it may be located close to the user's hand, and thus haptic notification may be easily transmitted to the user.

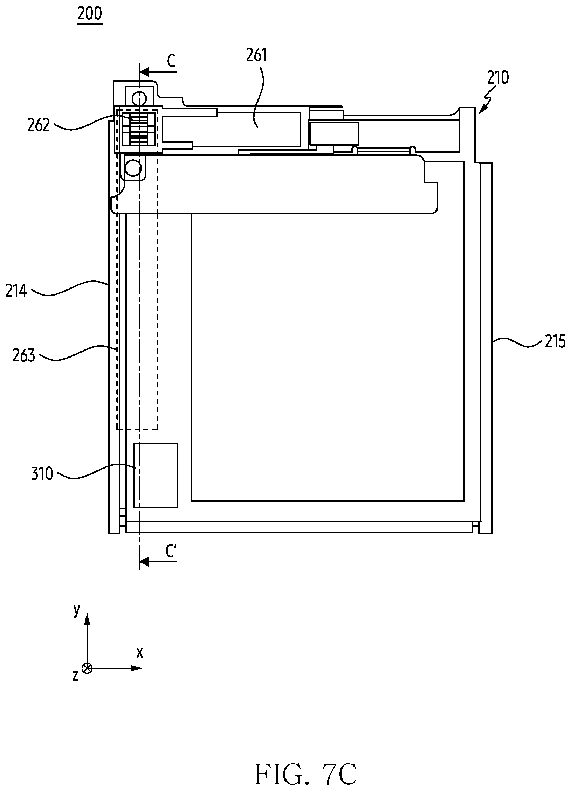

Referring to FIG. 7C, the first vibration motor 310 and the pinion gear 262 may be disposed close to the first periphery 214 of the first periphery 214 and the second periphery 215. According to an embodiment, the pinion gear 262 may be disposed close to an end of the first periphery 214 in +y direction at a position close to the first periphery 214 of the first periphery 214 and the second periphery 215. The first vibration motor 310 may be disposed close to an end of the first periphery 214 in -y direction at a position close to the first periphery 214 of the first periphery 214 and the second periphery 215.

Referring to FIG. 7D, according to an embodiment, the electronic device 200 may include a frame cover 213 disposed in the first housing 210. The frame cover 213 may be referred to as the frame cover 213 of FIG. 3A. The first vibration motor 310, the motor 261, and the pinion gear 262 may be disposed on the frame cover 213.

According to an embodiment, the flexible display 230 may include a first part 230a disposed on the second housing 220, and a second part 230b extended from the first part 230a and capable of being inserted into the second housing 220 or pulled out from the second housing 220 according to the movement of the second housing 220. In the first state, the second part 230b may be inserted into the second housing 220 and disposed on the vibration motor. According to an embodiment, the second part 230b may be inserted between the second housing 220 and the frame cover 213 when the electronic device 200 is switched from the second state to the first state, and the second and 230b may be disposed on the first vibration motor 310 disposed on the frame cover 213 in the first state. Since an end in -y direction may be located close to the user when the electronic device 200 is used by the user, the vibration provided from the first vibration motor 310 may be easily transmitted to the user. In case that the first vibration motor 310 is disposed close to the end in -y direction, the user gripping the electronic device 200 may easily recognize the haptic notification.

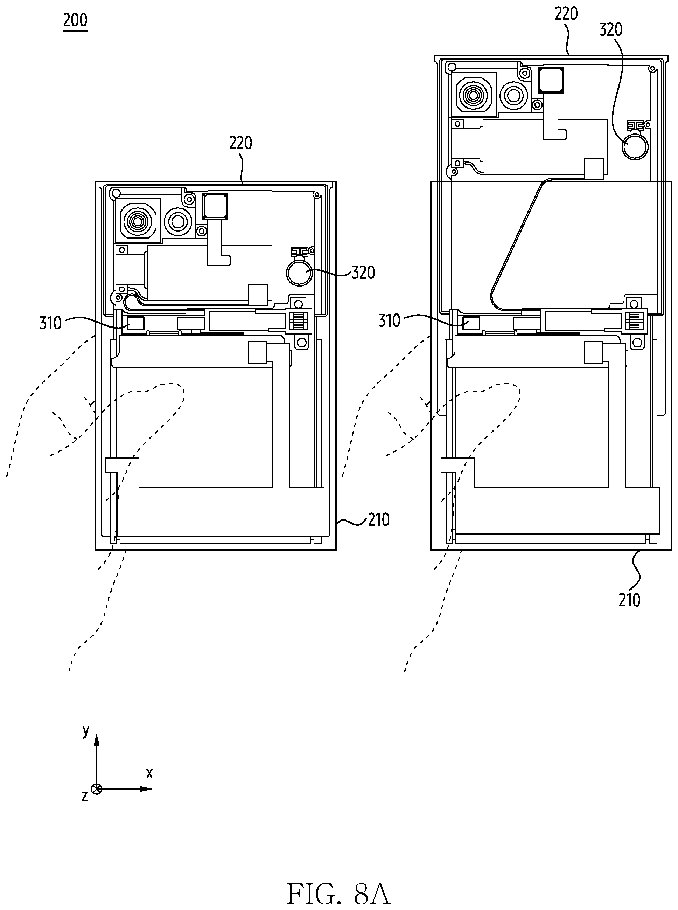

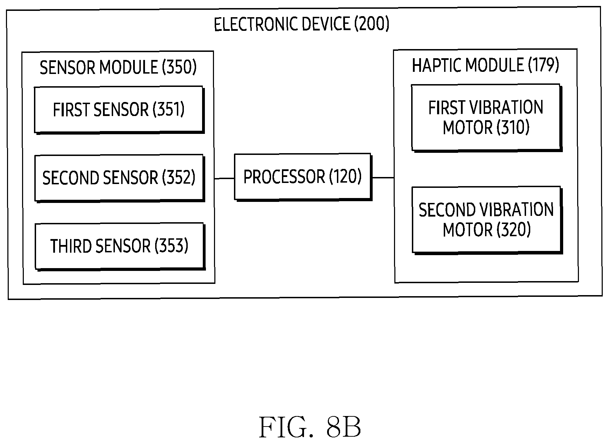

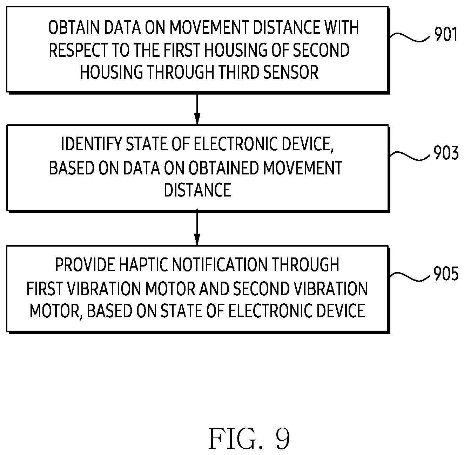

FIG. 8A illustrates a use state of an electronic device according to an embodiment. FIG. 8B is a block diagram of a sensor module of an electronic device according to an embodiment. FIG. 9 illustrates an example of an operation in which an electronic device according to an embodiment provides haptic notification based on a state of the electronic device.

The operations of FIG. 9 may be operations performed by at least one processor (e.g., the processor 120 of FIG. 8B) executing instructions stored in a memory (e.g., the memory 130 of FIG. 1).

Referring to FIG. 8A, a user may use the electronic device 200 while gripping the electronic device 200. The electronic device 200 may be used in the first state or in the second state. The position of the second vibration motor 320 in the first state may be closer to the user's hand than the position of the second vibration motor 320 in the second state. For example, the user may grip the first housing 210 and use the electronic device 200. In the second state, the distance between the second vibration motor 320 and the user's hand may be longer than the distance between the second vibration motor 320 and the user's hand in the first state.

Referring to FIG. 8B, the electronic device 200 according to an embodiment may include a processor 120, a haptic module 179, and a sensor module 350. The processor 120 and the haptic module 179 may be the same as or similar to the processor and the haptic module of FIG. 1, and overlapped descriptions will be omitted. The sensor module 350 may include a first sensor 351 for identifying a user's grip to the first housing 210 and the second housing 220, a second sensor 352 for detecting positional moving of the electronic device 200, and /or a third sensor 353 for identifying the movement distance of the second housing 220. The first sensor 351, the second sensor 352, and the third sensor 353 may be operatively coupled to at least one processor 120. The number of the first sensor 351, the second sensor 352, and the third sensor 353 is not limited.

The electronic device 200 according to an embodiment may include the third sensor 353 operatively connected to at least one processor 120 and for identifying movement of the second housing 220. According to an embodiment, the third sensor 353 may detect the pull-out length of the flexible display 230 and/or the movement distance of the second housing 220. For example, the third sensor 353 may be a hall sensor disposed in the first housing 210, and the second housing 220 and/or the flexible display 230 may include a magnetic material (e.g., a magnet) that causes a hall-effect. The hall sensor may detect the movement of the magnetic material by the movement of the second housing 220. The hole sensor may identify the movement distance of the second housing 220 and/or the pull-out length of the flexible display 230 based on a change in the magnetic field formed by the magnetic material body in the second housing 220 and/or the flexible display 230. The positions of the hole sensor and the magnetic material are not limited thereto, and the hole sensor may be disposed in the second housing 220, and the magnetic material may be disposed in the first housing 210.

According to an embodiment, in a first state in which the second housing 220 may move in the first direction of the first direction and the second direction with respect to the first housing 210, at least one processor 120 may be configured to provide a haptic notification for notifying an event related to the electronic device 200 through a vibration motor of the first vibration motor 310 and the second vibration motor 320. In a second state in which the second housing 220 may move in the second direction of the first direction and the second direction with respect to the first housing 210, at least one processor 120 may be configured to provide the haptic notification by controlling the first vibration motor 310 and the second vibration motor 320.

Referring to FIG. 9, in operation 901, at least one processor 120 may be configured to obtain data on movement distance of the second housing 220 with respect to the first housing 210 through the third sensor 353. According to an embodiment, the third sensor 353 may generate data on movement distance of the second housing 220 with respect to the first housing 210. For example, the third sensor 353 may be a hall sensor capable of obtaining a change in the magnitude of a magnetic field according to the movement of the second housing 220 and/or a direction of the magnetic field, but is not limited thereto. At least one processor 120 may receive the generated data from the third sensor 353.

In operation 903, at least one processor 120 may identify whether a state of the electronic device 200 is the first state or the second state based on the obtained data on the movement distance. According to an embodiment, in operation 903, at least one processor 120 may compare the data received from the third sensor 353 with reference data corresponding to the first state and the second state. For example, when the data is within the range of reference data corresponding to the first state, at least one processor 120 may identify the state of the electronic device 200 as the first state. The reference data corresponding to the first state may be data indicating a state in which the second housing 220 is inserted based on the first housing 210. The reference data corresponding to the second state may be data indicating a state in which the second housing 220 is pulled out based on the first housing 210. Since the distance between the magnet disposed in the first housing 210 and the third sensor 353 disposed in the second housing 220 is the shortest distance, in a first state in which the second housing 220 may move in a first direction (e.g., +y direction) with respect to the first housing 210, the magnitude of the magnetic field obtained through the third sensor 353 may be within the first range. Since the distance between the magnet disposed in the first housing 210 and the third sensor 353 disposed in the second housing 220 is the longest distance, in a second state in which the second housing 220 may move in the second direction (e.g., -y direction) with respect to the first housing 210, the magnitude of the magnetic field obtained through the third sensor 353 may be within the second range. The magnitude of the magnetic field included in the first range may be greater than the magnitude of the magnetic field included in the second range. In case that the data is within the first range corresponding to the first state, at least one processor 120 may identify that the electronic device 200 is in the first state.

In operation 905, at least one processor 120 may provide haptic notification through the first vibration motor 310 and the second vibration motor 320 based on the identified state of the electronic device 200.

According to an embodiment, in response to identifying that the identified state of the electronic device 200 is a first state, at least one processor 120 may be configured to provide haptic notification for notifying an event related to the electronic device 200 through one of the first vibration motor 310 and the second vibration motor 320. In case that the electronic device 200 is in the first state, the first vibration motor 310 and the second vibration motor 320 may be disposed relatively closer than when the electronic device 200 is in the second state. Since the first vibration motor 310 and the second vibration motor 320 are disposed relatively closely, the user may easily recognize the occurrence of the haptic notification by only vibration by one vibration motor. For example, in the first state, at least one processor 120 may be configured to provide haptic notification through the first vibration motor 310 in the first housing 210. Since the first vibration motor 310 is disposed in the first housing 210 close to the user when the user grips the electronic device 200, the first vibration motor 310 may be disposed closer to the user than the second vibration motor 320. According to an embodiment, in the first state, the first vibration motor 310 may be activated, and the second vibration motor 320 may be deactivated.

According to an embodiment, in response to identifying that the state of the electronic device 200 is the second state, at least one processor 120 may be configured to control the first vibration motor 310 and the second vibration motor 320 to provide haptic notification. In the second state, the first vibration motor 310 and the second vibration motor 320 may be disposed relatively far away. Since the area where the first housing 210 and the second housing 220 overlap (e.g., the first area 220-1 of FIG. 4) is reduced in the second state, when only the first vibration motor 310 is operated, a vibration transmitted to the second housing 220 may be weak, and a vibration force deviation may occur according to the position of the electronic device 200. At least one processor 120 may be configured to provide haptic notification through the first vibration motor 310 and the second vibration motor 320 in the second state. According to an embodiment, in the second state, both the first vibration motor 310 and the second vibration motor 320 may be activated. For example, in response to identifying that the state of the electronic device 200 is switched from the first state to the second state, at least one processor 120 may activate the deactivated second vibration motor 320.

The electronic device 200 according to an embodiment may control the operations of the first vibration motor 310 and the second vibration motor 320 based on the state of the electronic device 200. The electronic device 200 according to an embodiment may reduce mechanical damage to the electronic device 200 and may reduce power consumption of the battery by reducing unnecessary operations of the first vibration motor 310 or the second vibration motor 320.

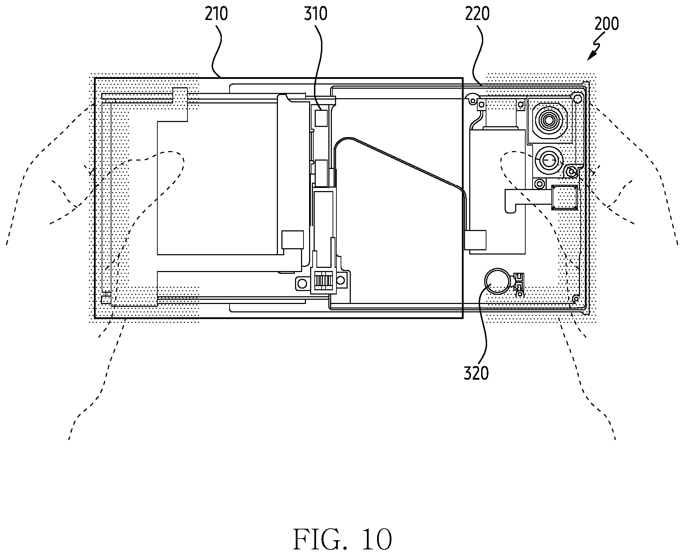

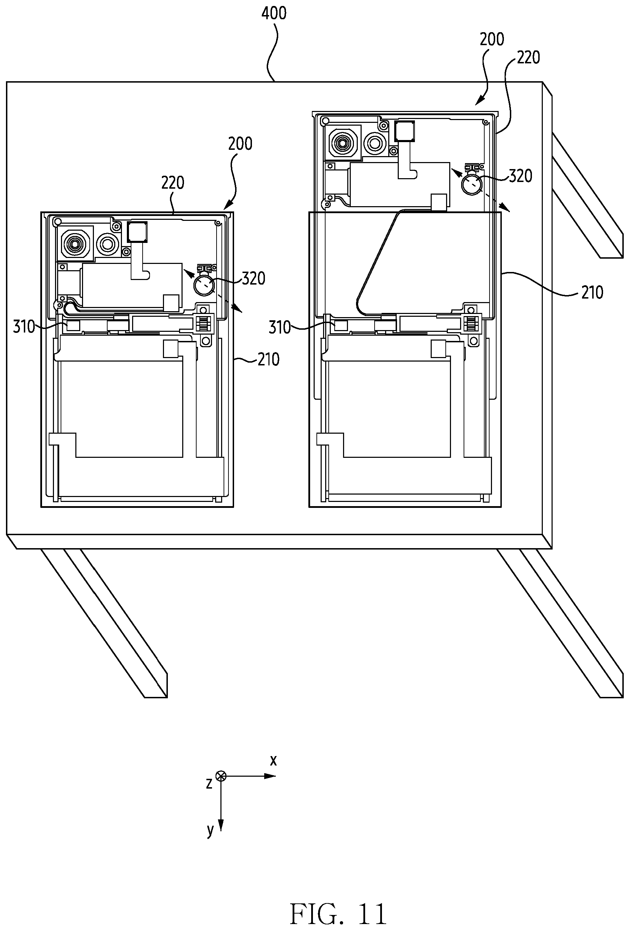

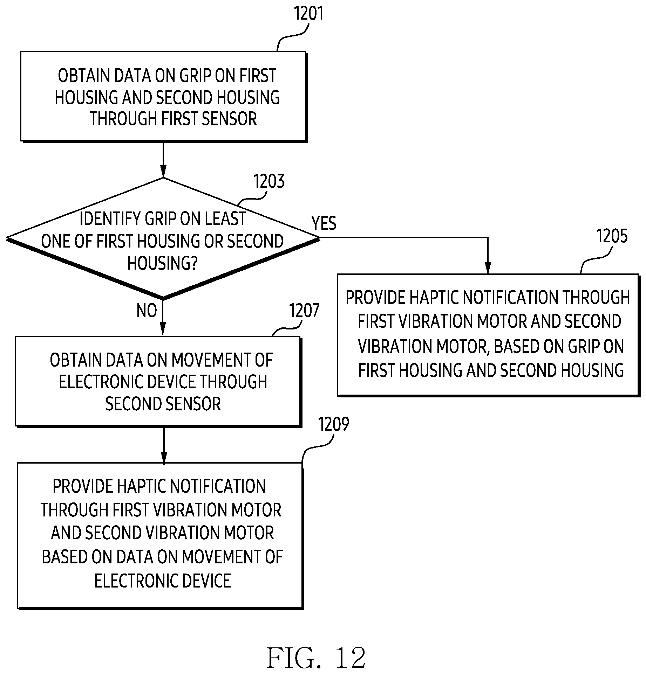

FIG. 10 illustrates a use state of an electronic device according to an embodiment. FIG. 11 illustrates an example in which an electronic device according to an embodiment is placed on an external object. FIG. 12 illustrates an example of an operation in which an electronic device according to an embodiment provides haptic notification based on a grip with respect to the electronic device and movement of the electronic device.

The operations of FIG. 12 may be operations performed by at least one processor (e.g., processor 120 of FIG. 8B) performing instructions stored in a memory (e.g., memory 130 of FIG. 1).

Referring to FIG. 10, the electronic device 200 may be used in a state in which both hands of a user are gripped. For example, in case that a user uses an entertainment (e.g., game, video watching) service provided by the electronic device 200, the electronic device 200 in the second state in which the display area of the flexible display 230 (e.g., the display 230 of FIG. 3A) is extended may be used. In the second state, since both the first part 230a (e.g., the first part 230a of FIG. 3A) and the second part 230b (e.g., the second part 230b of FIG. 3A) of the flexible display 230 are exposed to the outside, the size of the screen provided to the user may increase.

In the second state, when the electronic device 200 is used in the landscape mode, the user may grip the electronic device 200 with both hands. The user may grip a part of the first housing 210 and a part of the second housing 220 and use the electronic device 200. At least one processor may identify the grip to the first housing 210 and/or the second housing 220 through the first sensor 351.

The electronic device 200 according to an embodiment may include a first sensor 351 (e.g., the first sensor 351 of FIG. 8B) operatively coupled to at least one processor and for identifying a user's grip to the first housing 210 and/or the second housing 220. The first sensor 351 may be disposed in the periphery of the first housing 210 and/or the second housing 220 to determine whether the electronic device 200 is gripped by the user. For example, the first sensor 351 may be configured to convert pressure applied to the first housing 210 and/or the second housing 220 into an electrical signal. For another example, the first sensor 351 may be configured to convert a change in capacitance of the first housing 210 and/or the second housing 220 into an electrical signal. However, the first sensor 351 is not limited to the above-described embodiment. At least one processor may obtain the electrical signal from the first sensor 351, and may identify the user's grip to the first housing 210 and/or the second housing 220 based on the electrical signal.

According to an embodiment, at least one processor may be configured to provide haptic notification in response to identifying a grip to the first housing 210 through the first sensor 351 through the first vibration motor 310. At least one processor may be configured to provide haptic notification through the second vibration motor 320 in response to identifying a grip to the second housing 220 through the first sensor 351. For example, at least one processor may be configured to provide haptic notification through the first vibration motor 310 in the first housing 210 in response to identifying the user's grip to the first housing 210. For another example, at least one processor may be configured to provide haptic notification through the first vibration motor 310 in the first housing 210 and the second vibration motor 320 in the second housing 220 in response to identifying the user's grip to the first housing 210 and the second housing 220.

Referring to FIG. 11, the electronic device 200 according to an embodiment may be placed on the external object 400 in a first state or a second state. For example, when the electronic device 200 is not used, the electronic device 200 may be stored in a state placed on a desk. When an event related to the electronic device 200 occurs while the electronic device 200 is placed on the external object 400, at least one processor may be configured to provide haptic notification through one of the vibration motors 310 and the second vibration motor 320. According to an embodiment, at least one processor may be configured to provide haptic notification for notifying the event through a vibration motor of the first vibration motor 310 and the second vibration motor 320 in response to not identifying the grip to the first housing 210 and the second housing 220 through the first sensor 351.

According to an embodiment, one of the first vibration motor 310 and the second vibration motor 320 may be a vibration motor configured to provide vibration in a direction perpendicular to a surface on which the one vibration motor is disposed. For example, the first vibration motor 310 may be configured to provide vibration in a direction perpendicular to the surface (e.g., x y plane) of the first housing 210 on which the first vibration motor 310 is disposed, and the second vibration motor 320 may be configured to provide vibration in a horizontal direction (e.g., +y direction and -y direction, or +x direction and -x direction) to the surface of the second housing 220 on which the second vibration motor 320 is disposed. In the above-described case, at least one processor may be configured to provide haptic notification through the first vibration motor 310 in response to not identifying the grip to the first housing 210 and the second housing 220 through the first sensor 351. Since vibration in a direction (e.g., +z direction and -z direction) perpendicular to a surface in contact with the external object 400 may generate relatively large sound noise by contact with the external object 400 when the electronic device 200 is placed on the external object 400, the user may easily recognize haptic notification. Since vibration in a horizontal direction (e.g., +y direction and -y direction, or +x direction and -x direction) to the surface in contact with the external object 400 may generate relatively small sound noise, it may be difficult for the user to recognize haptic notification.

The electronic device 200 according to an embodiment may include a second sensor 352 (e.g., the second sensor 352 of FIG. 8B) operatively coupled to at least one processor and for detecting positional moving of the electronic device 200. For example, the second sensor 352 may be a six-axis sensor, an acceleration sensor, or a combination thereof, but is not limited thereto. At least one processor may identify whether the electronic device 200 is moving through the second sensor 352.

According to an embodiment, at least one processor may be configured to provide the haptic notification of a specified vibration pattern through the first vibration motor 310 and the second vibration motor 320, in response to identifying that the electronic device 200 is moving through the second sensor 352 and not identifying the grip to the first housing 210 and the second housing 220 through the first sensor 351. According to an embodiment, in a state that there is no grip on the electronic device 200, a situation in which the electronic device 200 is positional moving may occur. For example, when the user moves the electronic device 200 with the electronic device 200 in his pocket, the position of the electronic device 200 may be moved without a grip of the electronic device 200. In the above case, since it may be difficult for the user to recognize the haptic notification, at least one processor may be configured to provide haptic notification using the first vibration motor 310 and the second vibration motor 320. The haptic notification may be a specified vibration pattern. For example, the vibration pattern may be a pattern in which the first vibration motor 310 and the first vibration motor operate simultaneously. For another example, the vibration pattern may be a pattern in which the first vibration motor 310 and the second vibration motor 320 operate alternately, but is not limited thereto.

Referring to FIG. 12, in operation 1201, at least one processor 120 may be configured to obtain data on a grip on the first housing 210 and/or a grip on the second housing 220 through the first sensor 351. For example, the first sensor 351 may generate data on the pressure applied to the first housing 210 and/or the second housing 220. For another example, the first sensor 351 may generate data on a change in capacitance of the first housing 210 and/or the second housing 220. According to an embodiment, at least one processor 120 may receive the data from the first sensor 351.

In operation 1203, at least one processor 120 may be configured to identify at least one grip of the first housing 210 or the second housing 220. According to an embodiment, at least one processor 120 may identify whether a user's grip exists on the first housing 210 and whether the user's grip exists on the second housing 220 based on the data received from the first sensor 351. According to an embodiment, at least one processor 120 may compare data received from the first sensor 351 with reference data corresponding to a state in which a user's grip is present. For example, in case that the data on the grip on the first housing 210 received from the first sensor 351 is within the reference data range corresponding to the state in which the grip is present on the first housing 210, at least one processor 120 may identify that a user's grip exists on the first housing 210. In case that the pressure data or capacitance data on the first housing 210 received from the first sensor is greater than the predetermined reference pressure data or reference capacitance data, at least one processor 120 may identify that a user's grip exists on the first housing 210. For another example, in case that the data on the grip on the second housing 220 received from the first sensor 351 is outside the reference data range corresponding to the state in which the grip is present on the second housing 220 (e.g., less than the reference data), at least one processor 120 may identify that a user's grip does not exist on the second housing 220. When the pressure data or capacitance data on the first housing 210 received from the first sensor is less than the predetermined reference pressure data or reference capacitance data, at least one processor 120 may identify that a user's grip does not exist on the first housing 210.

In operation 1205, at least one processor 120 may be configured to provide haptic notification through the first vibration motor 310 and the second vibration motor 320 based on identifying grips on the first housing 210 and the second housing 220. According to an embodiment, at least one processor 120 may operate a vibration motor disposed in the at least one housing in which a grip is identified based on identifying at least one grip of the first housing 210 or the second housing 220. For example, in case that a grip on the first housing 210 of the first housing 210 and the second housing 220 is identified, at least one processor 120 may provide haptic notification and control to deactivate the second vibration motor 320 in the second housing 220 through the first vibration motor 310 in the first housing 210. Since the user grips the first housing 210, haptic notification through the first vibration motor 310 may be easily recognized.

In operation 1207, in case that the grip on the first housing 210 and the second housing 220 is not identified, at least one processor 120 may be configured to obtain data on the movement of the electronic device 200 through the second sensor 352. For example, the second sensor 352 may be a six-axis sensor and/or an acceleration sensor capable of generating data on the posture of the first housing 210 and the second housing 220, but is not limited thereto. The second sensor 352 may obtain data on the posture of the first housing 210 and the second housing 220 and transmit the obtained data to at least one processor 120.

In operation 1209, at least one processor 120 may be configured to provide haptic notification through the first vibration motor 310 and the second vibration motor 320 based on data on the movement of the electronic device 200. For example, in case that the data on the posture of the electronic device 200 obtained through the second sensor 352 is constantly changed in a specific direction, it may be identified that the electronic device 200 is moving in a possessed state by the user, but is not limited thereto.

According to an embodiment, in case that at least one processor 120 identifies that the electronic device 200 is moving, the at least one processor 120 may provide haptic notification of a specified pattern by controlling the first vibration motor 310 and the second vibration motor 320. The specified pattern may be a pattern in which the first vibration motor 310 and the second vibration motor 320 operate simultaneously or a pattern in which the first vibration motor 310 and the second vibration motor 320 operate alternately.

According to an embodiment, in case that at least one processor 120 determines that the electronic device 200 is in a stopped state without moving, the at least one processor may be configured to provide haptic notification by controlling a vibration motor of the first vibration motor 310 and the second vibration motor 320. In case that the grip on the first housing 210 and the second housing 220 does not exist and the electronic device 200 is not moving, at least one processor 120 may identify the electronic device 200 as being placed on the external object 400. At least one processor 120 may provide haptic notification through one of the first vibration motor 310 and the second vibration motor 320. The one vibration motor may be a vibration motor configured to provide vibration in a direction perpendicular to a surface on which the one vibration motor is disposed.

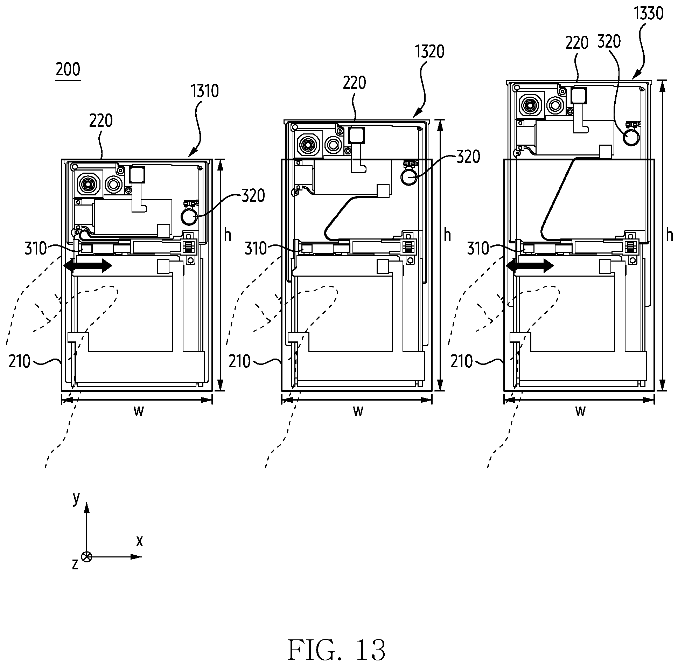

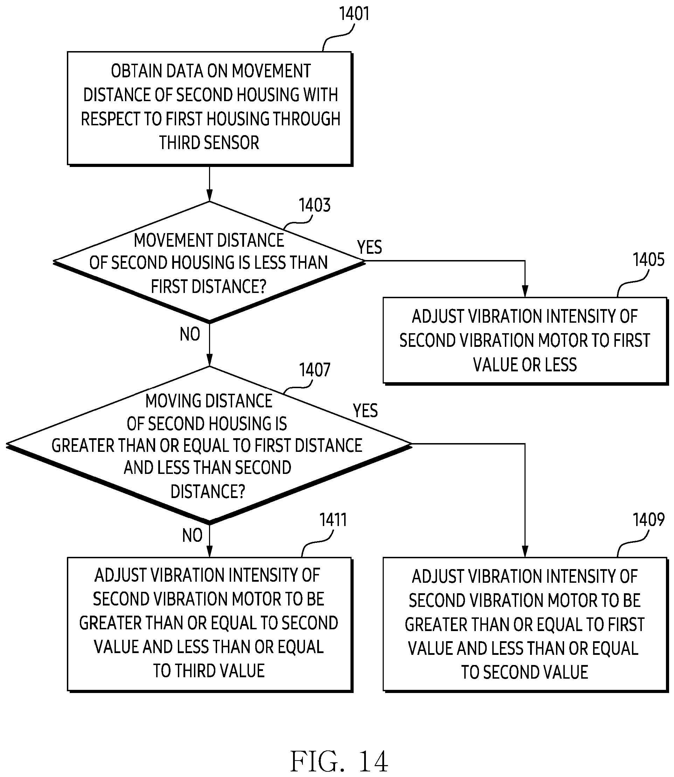

FIG. 13 illustrates a state according to movement distance of the second housing of the electronic device according to an embodiment. FIG. 14 illustrates an example of an operation in which an electronic device according to an embodiment provides haptic notification based on movement distance of a second housing.

The operations of FIG. 14 may be operations performed by at least one processor (e.g., processor 120 of FIG. 8B) performing instructions stored in a memory (e.g., memory 130 of FIG. 1).

Referring to FIG. 13, the electronic device 200 according to an embodiment may be used in various states according to the movement distance of the second housing 220. The state 1310 of FIG. 13 shows a first state capable of moving in a first direction (e.g., +y direction) of the first direction and a second direction (e.g., -y direction). The state 1330 of FIG. 13 shows a second state that may move in the second direction of the first direction and the second direction. The state 1320 of FIG. 13 shows a third state (e.g., an intermediate state) that is a state between the first state and the second state. The ratio of the height h to the width w of the electronic device 200 may be changed according to the movement distance of the second housing 220. For example, in the first state, the ratio of the height h to the width w may be 4.5 to 3. Due to the movement of the second housing 220, the ratio of the height h to the width w may be 21 to 9 in the second state. In the third state, which is an intermediate state between the first state and the second state, the ratio of the height h to the width w may be 16 to 9.

The user may use the electronic device 200 while gripping a part of the first housing 210. Since the second vibration motor 320 may be disposed relatively close to the user's hand in the first state, a vibration provided from the second vibration motor 320 in the first state may be easily transmitted to the user. In the third state, since the second vibration motor 320 is disposed farther from the user's hand than in the first state, a vibration provided from the second vibration motor 320 in the third state may be more difficult to transmit to the user than the vibration provided from the second vibration motor 320 in the first state. Since the second vibration motor 320 is disposed farthest from the user's hand in the second state, the vibration provided from the second vibration motor 320 may be difficult to be transmitted to the user in the second state. When the second vibration motor 320 has a constant vibration intensity, a deviation may occur in the vibration provided to the user according to the state of the electronic device 200.

According to an embodiment, at least one processor (e.g., the processor 120 of FIG. 1) may identify the movement distance of the second housing 220 through the third sensor 353 (e.g., the third sensor 353 of FIG. 8B). At least one processor may be configured to identify the movement distance of the second housing 220 through a third sensor 353, and to adjust the vibration intensity of the second vibration motor 320 based on the identified movement distance.

According to an embodiment, at least one processor may be configured to adjust the vibration intensity of the second vibration motor 320 to a first value or less in response to identifying that the identified movement distance is less than a first distance, adjust the vibration intensity of the second vibration motor 320 to a second value or less in response to identifying that the identified movement distance is greater than or equal to the first distance and less than the second distance, and adjust the vibration intensity of the second vibration motor 320 to a third value or less in response to identifying that the identified movement distance is greater than or equal to the second distance. According to an embodiment, the first value may be less than the second value, and the second value may be less than the third value. For example, the first value may be about 20% of the maximum output of the second vibration motor 320. The second value may be about 40% of the maximum output of the second vibration motor 320. The third value may be about 80% of the maximum output of the second vibration motor 320. However, the above-described values of the first value, the second value, and the third value are only illustrative, and are not limited thereto.

Referring to FIG. 14, in operation 1401, At least one processor (e.g., the processor 120 of FIG. 8B) may identify the movement distance of the second housing 220 with respect to the first housing 210 through a third sensor (e.g., the third sensor 353 of FIG. 8B). The operation 1401 may be the same as or similar to operation 901, and overlapped descriptions will be omitted.

In operation 1403, at least one processor 120 may be configured to identify whether the movement distance of the second housing 220 is less than the first distance, based on the data obtained through the third sensor 353. According to an embodiment, at least one processor 120 may compare data on the movement distance of the second housing 220 obtained through the third sensor 353 with data corresponding to the first distance. In case that the movement distance of the second housing 220 is less than the first distance, at least one processor 120 may identify that the state of the electronic device 200 is in the first state or substantially the same state as the first state.

In operation 1405, when the movement distance of the identified second housing 220 is less than the first distance, at least one processor 120 may be configured to adjust the vibration intensity of the second vibration motor 320 to a first value or less. Since a case in which the movement distance of the second housing 220 is less than the first distance is in the first state or substantially the same as the first state of the electronic device 200, the overlapping aera (e.g., the first area 220-1 of FIG. 4) of the first housing 210 and the second housing 220 may be relatively large. Even when the vibration intensity of the second vibration motor 320 is relatively weak, the user may easily recognize haptic notification because the overlapping area is large. For example, the first value may be about 20% of the maximum output of the second vibration motor 320, but is not limited thereto.

In operation 1407, at least one processor 120 may be configured to identify whether the movement distance of the second housing 220 is greater than or equal to a first distance and less than a second distance based on the data obtained through the third sensor 353. At least one processor 120 may compare data on the movement distance of the second housing 220 obtained through the third sensor 353 with data corresponding to the second distance. A case in which the movement distance of the second housing 220 is less than the second distance may mean a third state of the electronic device 200 or substantially the same state as the third state. As described in operation 903, the identification of the first distance and the second distance may be determined based on the magnitude of the magnetic field obtained through the third sensor.

In operation 1409, in case that the movement distance of the identified second housing 220 is greater than or equal to the first distance and less than the second distance, at least one processor 120 may be configured to adjust the vibration intensity of the second vibration motor 320 to a first value or more and a second value or less. Since a case in which the movement distance of the second housing 220 is greater than or equal to the first distance and less than the second distance is in the third state of the electronic device 200 or substantially the same state as the third state, the overlapping area (e.g., the first area 220-1 of FIG. 4) of the first housing 210 and the second housing 220 may be relatively smaller than the first state. At least one processor 120 may control the second vibration motor 320 with a vibration intensity greater than that of the second vibration motor 320 in the first state. For example, the second value may be about 40% of the maximum output of the second vibration motor 320, but is not limited thereto.

In operation 1411, in case that the movement distance of the identified second housing 220 is greater than or equal to the second distance, at least one processor 120 may be configured to adjust the vibration intensity of the second vibration motor 320 to a second value or more and a third value or less. For example, the third value may be about 80% of the maximum output of the second vibration motor 320, but is not limited thereto. In case that the movement distance of the second housing 220 is greater than or equal to the second distance, it may mean the second state of the electronic device 200 or substantially the same state as the second state. Since the overlapping area of the first housing 210 and the second housing 220 is relatively small in the second state or substantially the same state, it may be difficult to transmit vibration of the second vibration motor 320 to the user. According to an embodiment, in case that the movement distance of the second housing 220 is greater than or equal to the second distance, at least one processor provides strong vibration through the second vibration motor 320, so that the user may recognize haptic notification.

The electronic device according to an embodiment (e.g., the electronic device 200 of FIG. 4) may include a first housing (e.g., the first housing 210 of FIG. 4), a second housing (e.g., the second housing of FIG. 4), a flexible display (e.g., the flexible display 230 of FIG. 3A), a first vibration motor (e.g., the first vibration motor 310 of FIG. 4), a second vibration motor (e.g., the second vibration motor 320 of FIG. 4), a battery (e.g., the battery 250 of FIG. 4), a motor (e.g., the motor 261 of FIG. 4), a pinion gear (e.g., the pinion gear 262 of FIG. 4), a rack gear (e.g., the rack gear 263 of FIG. 4) and at least one processor (e.g., the processor 120 of FIG. 1).

According to an embodiment, the second housing may be movably coupled to the first housing in a first direction (e.g., +y direction of FIG. 4) or a second direction opposite to the first direction (e.g., -y direction of FIG. 4). The flexible display may be disposed in the second housing and expanded according to the movement of the second housing in the first direction. The flexible display may be contracted according to the movement of the second housing in the second direction. The battery may be disposed in the first housing and may supply power to the electronic device and/or electronic components in the electronic device. The motor may be disposed at the upper end of the battery in the first housing, and may provide a driving force for driving the second housing. The pinion gear may be disposed in the first housing and may rotate based on the driving force of the motor. The rack gear may be disposed in the second housing. The rack gear may move in engagement with the pinion gear. The rack gear may support the movement of the second housing based on the corresponding movement from the pinion gear for the enhanced performance of the expansion or contraction of the flexible display. The first vibration motor may be disposed at one side in a horizontal direction with the motor at the upper end of the battery in the first housing. The first vibration motor enables to stably transmit the vibration to the first housing even though the relative position of the first housing and second housing changes. The second vibration motor may be disposed at an upper end of the rack gear in the second housing. The second vibration motor enables to stably transmit the vibration to the second housing even though the relative position of the first housing and second housing changes. The at least one processor may be operatively coupled to the first vibration motor and the second vibration motor. The at least one processor may be operatively coupled to the first vibration motor and the second vibration motor. The at least one processor may be configured to identify reception of a signal related to a haptic notification for notifying an event related to the electronic device. The at least one processor may be configured to drive at least one of the first vibration motor or the second vibration motor based on the signal. Those identification and driving process enables the stably synchronized haptic notification to the first housing and the second housing by using the first vibration motor and the second vibration motor driven by the at least one processor.

According to various embodiments disclosed herein, a rollable portable electronic device is provided so as to increase the size of a screen while maintaining portability. Various effects directly or indirectly identified through the disclosure may be provided.

According to various embodiments disclosed herein, a electronic device is provided so as to provide a haptic notification to a user by controlling an operation of vibration motors based on a state of the electronic device. Various effects directly or indirectly identified through the disclosure may be provided.

According to an embodiment, the first vibration motor may be spaced apart from a battery (e.g., the battery 250 of FIG. 4) in the first housing in the first direction. The second vibration motor may be disposed in an area of a second housing overlapping the first housing in a first state in which the second housing may move in the first direction of the first direction and the second direction with respect to the first housing. The second vibration motor may be spaced apart from the first housing in a second state in which the second housing may move in the second direction of the first direction and the second direction. The at least one processor may be configured to identify at least one of the first vibration motor and the second vibration motor to provide a haptic notification for notifying an event related to the electronic device.

According to an embodiment, the first vibration motor may be configured to provide vibration in a direction perpendicular to a surface of the first housing on which the first vibration motor is disposed. The second vibration motor may be configured to provide vibration in a horizontal direction to a surface of the second housing on which the second vibration motor is disposed.

The electronic device according to an embodiment may further include a camera module (e.g., the camera module 240 of FIG. 5A). The camera module may include a lens assembly (e.g., the lens assembly 241 of FIG. 5B) and a first bracket (e.g., the first bracket 242 of FIG. 5B). The lens assembly may be configured to collect light emitted from a subject and disposed on the second vibration motor. The first bracket may accommodate the lens assembly and the second vibration motor. The first bracket may be fixed in the second housing.

According to an embodiment, the second vibration motor may be configured to provide vibration in a horizontal direction to a surface of the second housing on which the second vibration motor is disposed.

The electronic device according to an embodiment may further include a speaker module (e.g., the speaker module 330 of FIG. 6A). The speaker module may include a speaker unit (e.g., the speaker unit 331 of FIG. 6B) and a second bracket (e.g., the second bracket 332 of FIG. 6B). The speaker unit may be configured to generate an audio signal. The second bracket may accommodate the speaker unit and the second vibration motor. The second bracket may be fixed in the second housing.

According to an embodiment, the speaker unit may be disposed on the second vibration motor in the second bracket. The second vibration motor may be configured to provide vibration in a horizontal direction to a surface of the second housing on which the second vibration motor is disposed.

According to an embodiment, the second vibration motor and the speaker unit may be disposed on a surface of the second housing on which a speaker module is disposed in the second bracket. The second vibration motor may be configured to provide vibration in a direction perpendicular to a surface of the second housing on which the second vibration motor is disposed.

The electronic device according to an embodiment may further include a motor (e.g., the motor 261 of FIG. 7A), a pinion gear (e.g., the pinion gear 262 of FIG. 7A), and a rack gear (e.g., the rack gear 263 of FIG. 7A). The motor may be disposed in the first housing. The motor may provide power to the second housing. The pinion gear may be disposed close to the first periphery of the first housing parallel to the first direction, of the first periphery (e.g., the first periphery 214 in FIG. 7A) and the second periphery (e.g., the second periphery 215 in FIG. 7A). The pinion gear may be rotatably connected to the shaft of the motor. The rack gear may be engaged with the pinion gear. The rack gear may be moved by rotation of the pinion gear. The rack gear may be fixed to the second housing. The first vibration motor may be disposed close to the second periphery of the first periphery and the second periphery.

The electronic device according to an embodiment may further include a frame cover (e.g., the frame cover 213 of FIG. 7D). The frame cover may be disposed in the first housing. The first vibration motor may be disposed on the frame cover.

According to an embodiment, the flexible display may include a first part (e.g., the first part 230a of FIG. 7D) and a second part (e.g., the second part 230b of FIG. 7D). The first part may be disposed on the second housing. The second part may be extended from the first part. The second part may be inserted into the second housing or may be pulled-out from the second housing according to the movement of the second housing. The second part may be disposed on the first vibration motor in the first state.

According to an embodiment, the second housing may include a connector hole (e.g. connector hole 340 in FIG. 7A) to which a connector of an external electronic device may be connected. The connector hole may be disposed close to the third periphery of the third periphery (e.g., the third periphery 224 in FIG. 7A) and the fourth periphery (e.g., the fourth periphery 225 in FIG. 7A) of the second housing parallel to the first direction. The second vibration motor may be disposed close to the fourth periphery of the third periphery and the fourth periphery.

According to an embodiment, the first vibration motor may be disposed close to the first periphery of the first periphery and the second periphery.

The electronic device according to an embodiment may further include at least one first sensor (e.g., the first sensor 351 of FIG. 8B). The at least one first sensor may be operatively coupled to the at least one processor. The at least one first sensor may identify user grips on the first housing and the second housing. The at least one processor may be configured to identify the grip on the first housing or the second housing through the at least one first sensor. The at least one processor may be configured to provide the haptic notification through the first vibration motor in response to identifying the grip to the first housing through the at least one first sensor. The at least one processor may be configured to provide the haptic notification through the second vibration motor in response to identifying the grip to the second housing through the at least one first sensor.

According to an embodiment, the at least one processor may be configured to provide a haptic notification for notifying the event through a vibration motor of the first vibration motor and the second vibration motor in response to not identifying the grip to the first housing and the second housing through the at least one first sensor. The vibration motor may be configured to provide vibration in a direction perpendicular to a plane on which the one vibration motor is disposed.

The electronic device according to an embodiment may further include at least one second sensor (e.g., the second sensor 352 of FIG. 8B). The at least one second sensor may be operatively coupled to the at least one processor. The at least one second sensor may detect positional moving of the electronic device. The at least one processor may be configured to provide the haptic notification of a specified vibration pattern through first vibration motor and the second vibration motor, in response to identifying that the electronic device is moving through the at least one second sensor and not identifying the grip to the first housing and the second housing through the at least one first sensor.

According to an embodiment, the specified vibration pattern may be a pattern in which the first vibration motor and the second vibration motor are simultaneously operated or a pattern in which the first vibration motor and the second vibration motor are operated alternately.

The electronic device according to an embodiment may further include at least one third sensor (e.g., the third sensor 353 of FIG. 8B). The at least one third sensor may be operatively coupled to the at least one processor. The at least one third sensor may identify the movement distance of the second housing. The at least one processor may be configured to identify the movement distance of the second housing through the at least one third sensor. The at least one processor may be configured to adjust the vibration intensity of the second vibration motor based on the identified movement distance.

According to an embodiment, the at least one processor may be configured to adjust a vibration intensity of the second vibration motor to be less than or equal to a first value in response to identifying that the identified movement distance is less than a first distance. The at least one processor may be configured to adjust a vibration intensity of the second vibration motor to be less than or equal to a second value greater than the first value in response to identifying that the identified movement distance is greater than the first distance and less than the second distance. The at least one processor may be configured to adjust a vibration intensity of the second vibration motor to be less than or equal to a third value greater than the second value in response to identifying that the identified movement distance is greater than the second distance.

According to an embodiment, an electronic device (e.g., the electronic device 200 in FIG. 5) may include a first housing (e.g., the first housing 210 in FIG. 5), a second housing (e.g., the second housing in FIG. 5), a flexible display (e.g., the flexible display 230 in FIG. 3A), a first vibration motor (e.g., the first vibration motor 310 of FIG. 5), a second vibration motor (e.g., the second vibration motor 320 of FIG. 5), and at least one processor (e.g., the processor 120 of FIG. 1).

According to an embodiment, the second housing may be movably coupled to the first housing in a first direction (e.g., +y direction of FIG. 4) or a second direction opposite to the first direction (e.g., -y direction of FIG. 4). The flexible display may be disposed in the second housing and expanded according to the movement of the second housing in the first direction. The flexible display may be contracted according to the movement of the second housing in the second direction. The first vibration motor may be disposed in the first housing. The second vibration motor may be disposed in the second housing. The at least one processor may be operatively coupled to the first vibration motor and the second vibration motor. The at least one processor may be configured to provide a haptic notification for notifying an event related to the electronic device through a vibration motor of the first vibration motor and the second vibration motor in a first state in which the second housing is movable in the first direction of the first direction and the second direction with respect to the first housing. The at least one processor may be configured to provide a haptic notification by controlling the first vibration motor and the second vibration motor in a second state in which the second housing is movable in the second direction of the first direction and the second direction with respect to the first housing.

According to an embodiment, the first vibration motor may be configured to provide vibration in a direction perpendicular to a surface of the first housing on which the first vibration motor is disposed. The second vibration motor may be configured to provide vibration in a horizontal direction to a surface of the second housing on which the second vibration motor is disposed.

The electronic device according to an embodiment may further include a camera module (e.g., the camera module 240 of FIG. 5A). The camera module may include a lens assembly (e.g., the lens assembly 241 of FIG. 5B) and a first bracket (e.g., the first bracket 242 of FIG. 5B). The lens assembly may be configured to collect light emitted from a subject and disposed on the second vibration motor. The first bracket may accommodate the lens assembly and the second vibration motor. The first bracket may be fixed in the second housing.

According to an embodiment, the second vibration motor may be configured to provide vibration in a horizontal direction to a surface of the second housing on which the second vibration motor is disposed.

The electronic device according to an embodiment may further include a speaker module (e.g., the speaker module 330 of FIG. 6A). The speaker module may include a speaker unit (e.g., the speaker unit 331 of FIG. 6B) and a second bracket (e.g., the second bracket 332 of FIG. 6B). The speaker unit may be configured to generate an audio signal. The second bracket may accommodate the speaker unit and the second vibration motor. The second bracket may be fixed in the second housing.

According to an embodiment, the speaker unit may be disposed on the second vibration motor in the second bracket. The second vibration motor may be configured to provide vibration in a horizontal direction to a surface of the second housing on which the second vibration motor is disposed.

According to an embodiment, the second vibration motor and the speaker unit may be disposed on a surface of the second housing on which a speaker module is disposed in the second bracket. The second vibration motor may be configured to provide vibration in a direction perpendicular to a surface of the second housing on which the second vibration motor is disposed.

The electronic device according to an embodiment may further include a motor (e.g., the motor 261 of FIG. 7A), a pinion gear (e.g., the pinion gear 262 of FIG. 7A), and a rack gear (e.g., the rack gear 263 of FIG. 7A). The motor may be disposed in the first housing. The motor may provide power to the second housing. The pinion gear may be disposed close to the first periphery of the first periphery (e.g., the first periphery 214 in FIG. 7A) and the second periphery (e.g., the second periphery 215 in FIG. 7A) of the first housing parallel to the first direction. The pinion gear may be rotatably connected to the shaft of the motor. The rack gear may be engaged with the pinion gear. The rack gear may be moved by rotation of the pinion gear. The rack gear may be fixed to the second housing. The first vibration motor may be disposed close to the second periphery of the first periphery and the second periphery.

According to an embodiment, the second housing may include a connector hole(e.g., connector hole 340 of FIG. 7A) for connecting a connector of an external electronic device. The connector hole may be disposed close to the third periphery of the third periphery (e.g., the third periphery 224 in FIG. 7A) and the fourth periphery (e.g., the fourth periphery 225 in FIG. 7A) of the second housing parallel to the first direction. The second vibration motor may be disposed close to the fourth periphery of the third periphery and the fourth periphery.

According to an embodiment, in the first state, the first housing may include a first periphery overlapping the third periphery and a second periphery opposite to the first periphery. The first vibration motor may be disposed close to the first periphery of the first periphery and the second periphery.

An electronic device according to an embodiment (e.g., the electronic device 200 of FIG. 4) may include a first housing (e.g., the first housing 210 of FIG. 4), a second housing (e.g., the second housing of FIG. 4), a flexible display (e.g., the flexible display 230 of FIG. 3A), a first vibration motor (e.g., the first vibration motor 310 of FIG. 4), a second vibration motor (e.g., the second vibration motor 320 of FIG. 4), and at least one processor (e.g., the processor 120 of FIG. 1).

According to an embodiment, the second housing may be movably coupled in a first direction (e.g., +y direction in FIG. 4) or a second direction opposite to the first direction (e.g., -y direction in FIG. 4) with respect to the first housing. The flexible display may be disposed in the second housing and expanded according to the movement of the second housing in the first direction. The flexible display may be contracted according to the movement of the second housing in the second direction. The first vibration motor may be disposed in the first housing. The second vibration motor may be disposed in the second housing. At least one processor may be operatively coupled to the first vibration motor and the second vibration motor. The second vibration motor may be disposed in an area of the second housing overlapping the first housing in a first state in which the second housing may move in the first direction of the first direction and the second direction with respect to the first housing. The second vibration motor may be spaced apart from the first housing in a second state in which the second housing may move in the second direction of the first direction and the second direction with respect to the first housing. The at least one processor may be configured to identify at least one of the first vibration motor and the second vibration motor to provide a haptic notification for notifying an event related to the electronic device.

According to an embodiment, the electronic device may include a motor (e.g., the motor 261 of FIG. 4) disposed in the first housing and providing power to the second housing, a pinion gear (e.g., the pinion gear 262 of FIG. 4), and a rack gear (e.g., the rack gear 263 of FIG. 4) engaged with the pinion gear, moved by rotation of the pinion gear, and fixed to the second housing. The pinion gear 262 may be disposed closer to the first periphery of the first periphery and the second periphery of the first housing parallel to the first direction and rotatably connected to a shaft of the motor. According to an embodiment, the first vibration motor may be disposed close to the second periphery of the first periphery and the second periphery.

According to an embodiment, the electronic device may further include a frame cover (e.g., the frame cover 213 of FIG. 3A) disposed in the first housing. According to an embodiment, the first vibration motor may be disposed on the frame cover.

According to an embodiment, the second housing may include a connector hole (e.g., the connector hole 340 of FIG. 7A) disposed close to a third periphery of a third periphery and the fourth periphery of the second housing parallel to the first direction, and for connecting a connector of an external electronic device. According to an embodiment, the second vibration motor is disposed close to the fourth periphery of the third periphery and the fourth periphery.

According to an embodiment, the first vibration motor may be disposed close to the first periphery of the first periphery and the second periphery.

According to an embodiment, the flexible display may include a first part disposed on the second housing and a second part extended from the first part and inserted into the second housing or pulled-out from the second housing according to the movement of the second housing.

According to an embodiment, the second part may be disposed on the first vibration motor in the first state.

An electronic device according to an embodiment comprises a first housing, a second housing movably coupled to the first housing in a first direction or in a second direction opposite to the first direction, a flexible display disposed in the second housing and expanded or contracted according to movement of the second housing in the first direction or the second direction, a first vibration motor disposed in the first housing, a second vibration motor disposed in the second housing, and at least one processor operatively coupled to the first vibration motor and the second vibration motor. The at least one processor is configured to provide a haptic notification for notifying an event related to the electronic device through a vibration motor of the first vibration motor and the second vibration motor in a first state in which the second housing is movable in the first direction of the first direction and the second direction with respect to the first housing, and provide a haptic notification by controlling the first vibration motor and the second vibration motor in a second state in which the second housing is movable in the second direction of the first direction and the second direction with respect to the first housing.

According to an embodiment, the first vibration motor is configured to provide vibration in a direction perpendicular to a surface of the first housing on which the first vibration motor is disposed. The second vibration motor is configured to provide vibration in a horizontal direction to a surface of the second housing on which the second vibration motor is disposed.

The electronic device according to an embodiment further comprises a motor disposed in the first housing and providing power to the second housing, a pinion gear disposed closer to the first periphery of the first periphery and the second periphery of the first housing parallel to the first direction and rotatably connected to a shaft of the motor, and a rack gear engaged with the pinion gear, moved by rotation of the pinion gear, and fixed to the second housing. The first vibration motor is disposed close to the second periphery of the first periphery and the second periphery.

According to an embodiment, the second housing comprises a connector hole disposed close to a third periphery of a third periphery and the fourth periphery of the second housing parallel to the first direction, and for connecting a connector of an external electronic device. The second vibration motor is disposed close to the fourth periphery of the third periphery and the fourth periphery.

According to an embodiment, the first housing comprises a first periphery overlapping the third periphery in the first state and a second periphery opposite to the first periphery. The first vibration motor is disposed close to the first periphery of the first periphery and the second periphery.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 200) comprising:
a first housing (210);
a second housing (220) movably coupled to the first housing (210) in a first direction or in a second direction opposite to the first direction;
a flexible display (230) comprising a display area expanded or contracted according to movement of the second housing (220) with respect to the first housing (210);
a first vibration motor (310) disposed in the first housing (210);
a second vibration motor (320) disposed in the second housing (220); and
at least one processor (120) configured to:
identify reception of a signal related to a haptic notification for notifying an event related to the electronic device (101, 200), and
drive at least one of the first vibration motor (310) and the second vibration motor (320) based on the signal,
**characterised in that**
a direction of a vibration of the first vibration motor (310) is perpendicular to a direction of a vibration of the second vibration motor (320).

2. The electronic device (101, 200) of claim 1,
wherein the second vibration motor (320) is located in a region of the second housing (220) overlapping the first housing (210) in a first state (1310) in which the second housing (220) is movable in the first direction of the first direction and the second direction with respect to the first housing (210), and
wherein the second vibration motor (320) is spaced apart from the first housing (210) in a second state (1330) in which the second housing (220) is movable in the second direction of the first direction and the second direction with respect to the first housing (210).

3. The electronic device (101, 200) of claim 1 or 2,
wherein the first vibration motor (310) is configured to provide vibration in a direction perpendicular to a surface of the first housing (210) on which the first vibration motor (310) is disposed, and/or
wherein the second vibration motor (320) is configured to provide vibration in a horizontal direction to a surface of the second housing (220) on which the second vibration motor (320) is disposed.

4. The electronic device (101, 200) of any one of the preceding claims, further comprising:
a camera module (180, 240) comprising a lens assembly (241) and a first bracket (242) accommodating the lens assembly (241)
wherein the second vibration motor (320) disposed under the lens assembly (241) in the first bracket (242).

5. The electronic device (101, 200) of any one of the preceding claims, further comprising:
a speaker module (330) comprising a speaker unit (331) configured to generate an audio signal, and a second bracket (332) accommodating the speaker unit (331) and the second vibration motor (320).

6. The electronic device (101, 200) of claim 5,
wherein the second vibration motor (320) is disposed under the speaker unit (331) in the second bracket (332),
wherein the second vibration motor (320) is configured to provide vibration in a direction horizontal direction to a surface of the second housing (220) on which the second vibration motor (320) is disposed.

7. The electronic device (101, 200) of claim 5 or 6,
wherein the second vibration motor (320) and the speaker unit (331) are disposed on a surface of the second housing (220) in which the speaker module (330) is disposed in the second bracket (332), and
wherein the second vibration motor (320) is configured to provide vibration in a direction perpendicular to a surface of the second housing (220) on which the second vibration motor (320) is disposed.

8. The electronic device (101, 200) of any one of the preceding claims,
wherein the second housing (220) comprises a connector hole (340) disposed closer to a fourth periphery (225) of a third periphery (224) and the fourth periphery (225) of the second housing (220) parallel to the first direction, and for connecting a connector of an external electronic device (102, 104), and
wherein the second vibration motor (320) is disposed close to the third periphery (224) of the third periphery (224) and the fourth periphery (225).

9. The electronic device (101, 200) of any one of the preceding claims, further comprising:
at least one first sensor (351) operatively coupled to the at least one processor (120) and for identifying (1203) a grip of a user to the first housing (210) and the second housing (220), and
wherein the at least one processor (120) is configured to:
identify (1203) the grip to the first housing (210) or the second housing (220) through the at least one first sensor (351),
provide (1205) a haptic notification through the first vibration motor (310) in response to identifying the grip to the first housing (210) through the at least one first sensor (351), and
provide (1205) a haptic notification through the second vibration motor (320) in response to identifying the grip to the second housing (220) through the at least one first sensor (351).

10. The electronic device (101, 200) of claim 9,
wherein the at least one processor (120) is configured to provide a haptic notification for notifying the event through a vibration motor of the first vibration motor (310) and the second vibration motor (320) in response to not identifying the grip to the first housing (210) and the second housing (220) through the at least one first sensor (351), and
wherein the vibration motor is configured to provide vibration in a direction perpendicular to a surface on which the one vibration motor is disposed.

11. The electronic device (101, 200) of claim 9 or 10, further comprising:
at least one second sensor (352) operatively coupled to the at least one processor (120) and for detecting a positional moving of the electronic device (101, 200), and
wherein the at least one processor (120) is configured to provide (1209) the haptic notification of a specified vibration pattern through first vibration motor (310) and the second vibration motor (320), in response to identifying that the electronic device (101, 200) is moving through the at least one second sensor (352) and not identifying the grip to the first housing (210) and the second housing (220) through the at least one first sensor (351).

12. The electronic device (101, 200) of claim 11,
wherein the specified vibration pattern is a pattern in which the first vibration motor (310) and the second vibration motor (320) are simultaneously operated or a pattern in which the first vibration motor (310) and the second vibration motor (320) are operated alternately.

13. The electronic device (101, 200) of any one of the preceding claims, further comprising:
at least one third sensor (353) operatively coupled to the at least one processor (120) and for identifying a movement distance of the second housing (220), and
wherein the at least one processor (120) is configured to:
identify (1401) the movement distance of the second housing (220) through the at least one third sensor (353), and
adjust the vibration intensity of the second vibration motor (320) based on the identified movement distance.

14. The electronic device (101, 200) of claim 13,
wherein the at least one processor (120) is configured to:
adjust (1405) a vibration intensity of the second vibration motor (320) to be less than (15) or equal to a first value in response to identifying that the identified movement distance is less than (15) a first distance,
adjust (1409) a vibration intensity of the second vibration motor (320) to be less than (15) or equal to a second value and greater than the first value in response to identifying that the identified movement distance is greater than the first distance and less than (15) the second distance, and
adjust (1411) a vibration intensity of the second vibration motor (320) to be less than (15) or equal to a third value and greater than the second value in response to identifying that the identified movement distance is greater than the second distance.

15. The electronic device (101, 200) of any one of the preceding claims,
wherein the at least one processor (120) is configured to
provide the haptic notification through a vibration motor of the first vibration motor (310) and the second vibration motor (320) in a first state in which the second housing (220) is movable in the first direction of the first direction and the second direction with respect to the first housing (210), and
provide the haptic notification through the first vibration motor (310) and the second vibration motor (320) in a second state in which the second housing (220) is movable in the second direction of the first direction and the second direction with respect to the first housing (210).

## Patentansprüche

1. Elektronische Vorrichtung (101, 200), umfassend:
ein erstes Gehäuse (210);
ein zweites Gehäuse (220), das mit dem ersten Gehäuse (210) in einer ersten Richtung oder in einer zweiten Richtung entgegengesetzt zur ersten Richtung bewegbar gekoppelt ist;
eine flexible Anzeige (230), die einen Anzeigebereich umfasst, der entsprechend der Bewegung des zweiten Gehäuses (220) in Bezug auf das erste Gehäuse (210) erweitert oder zusammengezogen wird;
einen ersten Vibrationsmotor (310), der im ersten Gehäuse (210) angeordnet ist;
einen zweiten Vibrationsmotor (320), der im zweiten Gehäuse (220) angeordnet ist; und
mindestens einen Prozessor (120), der konfiguriert ist zum:
Identifizieren des Empfangs eines Signals, das sich auf eine haptische Benachrichtigung bezieht, um ein Ereignis in Bezug auf die elektronische Vorrichtung (101, 200) zu melden, und
Antreiben von zumindest einem des ersten Vibrationsmotors (310) und des zweiten Vibrationsmotors (320) basierend auf dem Signal,
**dadurch gekennzeichnet, dass** eine Richtung einer Vibration des ersten Vibrationsmotors (310) senkrecht zu einer Richtung einer Vibration des zweiten Vibrationsmotors (320) ist.

2. Elektronische Vorrichtung (101, 200) nach Anspruch 1,
wobei der zweite Vibrationsmotor (320) in einem Bereich des zweiten Gehäuses (220) angeordnet ist, der das erste Gehäuse (210) in einem ersten Zustand (1310) überlappt, in dem das zweite Gehäuse (220) in der ersten Richtung der ersten Richtung und der zweiten Richtung in Bezug auf das erste Gehäuse (210) bewegbar ist, und
wobei der zweite Vibrationsmotor (320) vom ersten Gehäuse (210) in einem zweiten Zustand (1330) beabstandet ist, in dem das zweite Gehäuse (220) in der zweiten Richtung der ersten Richtung und der zweiten Richtung in Bezug auf das erste Gehäuse (210) bewegbar ist.

3. Elektronische Vorrichtung (101, 200) nach Anspruch 1 oder 2,
wobei der erste Vibrationsmotor (310) konfiguriert ist, um eine Vibration in einer Richtung senkrecht zu einer Oberfläche des ersten Gehäuses (210) bereitzustellen, auf der der erste Vibrationsmotor (310) angeordnet ist, und/oder
wobei der zweite Vibrationsmotor (320) konfiguriert ist, um eine Vibration in einer horizontalen Richtung zu einer Oberfläche des zweiten Gehäuses (220), auf der der zweite Vibrationsmotor (320) angeordnet ist, bereitzustellen.

4. Elektronische Vorrichtung (101, 200) nach einem der vorhergehenden Ansprüche, ferner umfassend:
ein Kameramodul (180, 240), das eine Linsenanordnung (241) und eine erste Halterung (242) umfasst, die die Linsenanordnung (241) aufnimmt,
wobei der zweite Vibrationsmotor (320) unter der Linsenanordnung (241) in der ersten Halterung (242) angeordnet ist.

5. Elektronische Vorrichtung (101, 200) nach einem der vorhergehenden Ansprüche, ferner umfassend:
ein Lautsprechermodul (330), das eine Lautsprechereinheit (331), die konfiguriert ist, um ein Audiosignal zu erzeugen, und eine zweite Halterung (332), die die Lautsprechereinheit (331) und den zweiten Vibrationsmotor (320) aufnimmt, umfasst.

6. Elektronische Vorrichtung (101, 200) nach Anspruch 5,
wobei der zweite Vibrationsmotor (320) unter der Lautsprechereinheit (331) in der zweiten Halterung (332) angeordnet ist,
wobei der zweite Vibrationsmotor (320) konfiguriert ist, um Vibration in einer Richtung horizontal zu einer zweiten Oberfläche des zweiten Gehäuses (220), auf der der zweite Vibrationsmotor (320) angeordnet ist, bereitzustellen.

7. Elektronische Vorrichtung (101, 200) nach Anspruch 5 oder 6,
wobei der zweite Vibrationsmotor (320) und die Lautsprechereinheit (331) auf einer Oberfläche des zweiten Gehäuses (220) angeordnet sind, in dem das Lautsprechermodul (330) in der zweiten Halterung (332) angeordnet ist, und
wobei der zweite Vibrationsmotor (320) konfiguriert ist, um eine Vibration in einer Richtung senkrecht zu einer Oberfläche des zweiten Gehäuses (220) bereitzustellen, auf der der zweite Vibrationsmotor (320) angeordnet ist.

8. Elektronische Vorrichtung (101, 200) nach einem der vorhergehenden Ansprüche,
wobei das zweite Gehäuse (220) ein Verbinderloch (340), das näher an einem vierten Umfang (225) eines dritten Umfangs (224) und des vierten Umfangs (225) des zweiten Gehäuses (220) parallel zur ersten Richtung angeordnet ist, zum Anschließen eines Verbinders einer externen elektronischen Vorrichtung (102, 104) umfasst, und
wobei der zweite Vibrationsmotor (320) nahe am dritten Umfang (224) des dritten Umfangs (224) und des vierten Umfangs (225) angeordnet ist.

9. Elektronische Vorrichtung (101, 200) nach einem der vorhergehenden Ansprüche, ferner umfassend:
mindestens einen ersten Sensor (351), der betriebsmäßig mit dem mindestens einen Prozessor (120) gekoppelt ist, zum Identifizieren (1203) eines Griffs eines Benutzers an das erste Gehäuse (210) und das zweite Gehäuse (220), und
wobei der mindestens eine Prozessor (120) konfiguriert ist zum:
Identifizieren (1203) des Griffs an das erste Gehäuse (210) oder das zweite Gehäuse (220) durch den mindestens einen ersten Sensor (351),
Bereitstellen (1205) einer haptischen Benachrichtigung durch den ersten Vibrationsmotor (310) als Reaktion auf das Identifizieren des Griffs an das erste Gehäuse (210) durch den mindestens einen ersten Sensor (351), und
Bereitstellen (1205) einer haptischen Benachrichtigung durch den zweiten Vibrationsmotor (320) als Reaktion auf das Identifizieren des Griffs an das zweite Gehäuse (220) durch den mindestens einen ersten Sensor (351).

10. Elektronische Vorrichtung (101, 200) nach Anspruch 9,
wobei der mindestens eine Prozessor (120) konfiguriert ist, um eine haptische Benachrichtigung zum Melden des Ereignisses durch einen Vibrationsmotor des ersten Vibrationsmotors (310) und des zweiten Vibrationsmotors (320) als Reaktion auf das Nicht-Identifizieren des Griffs an das erste Gehäuse (210) und das zweite Gehäuse (220) durch den mindestens einen ersten Sensor (351) bereitzustellen, und
wobei der Vibrationsmotor konfiguriert ist, um Vibrationen in einer Richtung senkrecht zu einer Oberfläche bereitzustellen, auf der der eine Vibrationsmotor angeordnet ist.

11. Elektronische Vorrichtung (101, 200) nach Anspruch 9 oder 10, ferner umfassend:
mindestens einen zweiten Sensor (352), der betriebsmäßig mit dem mindestens einen Prozessor (120) gekoppelt ist. zum Erfassen einer Positionsbewegung der elektronischen Vorrichtung (101, 200), und
wobei der mindestens eine Prozessor (120) konfiguriert ist, um die haptische Benachrichtigung eines spezifizierten Vibrationsmusters durch den ersten Vibrationsmotor (310) und den zweiten Vibrationsmotor (320) als Reaktion auf das Identifizieren, dass sich die elektronische Vorrichtung (101, 200) durch den mindestens einen zweiten Sensor (352) bewegt, und das Nicht-Identifizieren des Griffs an das erste Gehäuse (210) und das zweite Gehäuse (220) durch den mindestens einen ersten Sensor (351) bereitzustellen (1209).

12. Elektronische Vorrichtung (101, 200) nach Anspruch 11,
wobei das festgelegte Vibrationsmuster ein Muster ist, bei dem der erste Vibrationsmotor (310) und der zweite Vibrationsmotor (320) gleichzeitig betrieben werden, oder ein Muster, bei dem der erste Vibrationsmotor (310) und der zweite Vibrationsmotor (320) abwechselnd betrieben werden.

13. Elektronische Vorrichtung (101, 200) nach einem der vorhergehenden Ansprüche, ferner umfassend:
mindestens einen dritten Sensor (353), der betriebsmäßig mit dem mindestens einen Prozessor (120) gekoppelt ist, zum Identifizieren einer Bewegungsdistanz des zweiten Gehäuses (220), und
wobei der mindestens eine Prozessor (120) konfiguriert ist zum:
Identifizieren (1401) der Bewegungsdistanz des zweiten Gehäuses (220) durch den mindestens einen dritten Sensor (353), und
Einstellen der Vibrationsintensität des zweiten Vibrationsmotors (320) basierend auf der identifizierten Bewegungsdistanz.

14. Elektronische Vorrichtung (101, 200) nach Anspruch 13,
wobei der mindestens eine Prozessor (120) konfiguriert ist zum:
Einstellen (1405) einer Vibrationsintensität des zweiten Vibrationsmotors (320), so dass sie kleiner (15) oder gleich einem ersten Wert ist, als Reaktion auf das Identifizieren, dass die identifizierte Bewegungsdistanz kleiner (15) als eine erste Distanz ist,
Einstellen (1409) einer Vibrationsintensität des zweiten Vibrationsmotors (320), so dass sie kleiner (15) oder gleich einem zweiten Wert und größer als der erste Wert ist, als Reaktion auf das Identifizieren, dass die identifizierte Bewegungsdistanz größer als die erste Distanz und kleiner als (15) die zweite Distanz ist, und
Einstellen (1411) einer Vibrationsintensität des zweiten Vibrationsmotors (320), so dass sie kleiner (15) oder gleich einem dritten Wert und größer als der zweite Wert ist, als Reaktion auf das Identifizieren, dass die identifizierte Bewegungsdistanz größer als die zweite Distanz ist.

15. Elektronische Vorrichtung (101, 200) nach einem der vorhergehenden Ansprüche,
wobei der mindestens eine Prozessor (120) konfiguriert ist zum:
Bereitstellen der haptischen Benachrichtigung durch einen Vibrationsmotor des ersten Vibrationsmotors (310) und des zweiten Vibrationsmotors (320) in einem ersten Zustand, in dem das zweite Gehäuse (220) in der ersten Richtung der ersten Richtung und der zweiten Richtung in Bezug auf das erste Gehäuse (210) bewegbar ist, und
Bereitstellen der haptischen Benachrichtigung durch den ersten Vibrationsmotor (310) und den zweiten Vibrationsmotor (320) in einem zweiten Zustand, in dem das zweite Gehäuse (220) in der zweiten Richtung der ersten Richtung und der zweiten Richtung in Bezug auf das erste Gehäuse (210) bewegbar ist.

## Revendications

1. Dispositif électronique (101, 200), comprenant :
un premier boîtier (210) ;
un deuxième boîtier (220) couplé de manière mobile au premier boîtier (210) dans une première direction ou dans une deuxième direction opposée à la première direction ;
un affichage flexible (230) comprenant une zone d'affichage agrandie ou contractée en fonction du mouvement du deuxième boîtier (220) par rapport au premier boîtier (210) ;
un premier moteur de vibration (310) disposé dans le premier boîtier (210) ;
un deuxième moteur de vibration (320) disposée dans le deuxième boîtier (220) ; et
au moins un processeur (120) configuré pour :
identifier la réception d'un signal lié à une notification haptique pour notifier un événement lié au dispositif électronique (101, 200), et
entraîner au moins un du premier moteur de vibration (310) et du deuxième moteur de vibration (320) en se basant sur le signal,
**caractérisé en ce qu'**une direction de vibration du premier moteur de vibration (310) est perpendiculaire à une direction de vibration du deuxième moteur de vibration (320).

2. Dispositif électronique (101, 200) de la revendication 1,
dans lequel le deuxième moteur de vibration (320) est situé dans une région du deuxième boîtier (220) chevauchant le premier boîtier (210) dans un premier état (1310) dans lequel le deuxième boîtier (220) est mobile dans la première direction et la deuxième direction par rapport au premier boîtier (210), et
dans lequel le deuxième moteur de vibration (320) est espacé du premier boîtier (210) dans un deuxième état (1330) dans lequel le deuxième boîtier (220) est mobile dans la deuxième direction de la première direction et de la deuxième direction par rapport au premier boîtier (210).

3. Dispositif électronique (101, 200) de la revendication 1 ou 2,
dans lequel le premier moteur de vibration (310) est configuré pour fournir une vibration dans une direction perpendiculaire à une surface du premier boîtier (210) sur lequel le premier moteur de vibration (310) est disposé, et/ou
dans lequel le deuxième moteur de vibration (320) est configuré pour fournir une vibration dans une direction horizontale à une surface du deuxième boîtier (220) sur lequel le deuxième moteur de vibration (320) est disposé.

4. Dispositif électronique (101, 200) de l'une quelconque des revendications précédentes, comprenant en outre :
un module de caméra (180, 240) comprenant un ensemble de lentilles (241) et un premier support (242) accueillant l'ensemble de lentilles (241).
dans lequel le deuxième moteur de vibration (320) est disposé sous l'ensemble de lentilles (241) dans le premier support (242).

5. Dispositif électronique (101, 200) de l'une quelconque des revendications précédentes, comprenant en outre :
un module de haut-parleur (330) comprenant une unité de haut-parleur (331) configurée pour générer un signal audio, et un deuxième support (332) accueillant l'unité de haut-parleur (331) et le deuxième moteur de vibration (320).

6. Dispositif électronique (101, 200) de la revendication 5,
dans lequel le deuxième moteur de vibration (320) est disposé sous l'unité de haut-parleur (331) dans le deuxième support (332),
dans lequel le deuxième moteur de vibration (320) est configuré pour fournir une vibration dans une direction horizontale à une surface du deuxième boîtier (220) sur lequel le deuxième moteur de vibration (320) est disposé.

7. Dispositif électronique (101, 200) de la revendication 5 ou 6,
dans lequel le deuxième moteur de vibration (320) et le module de haut-parleur (331) sont disposés sur une surface du deuxième boîtier (220) dans lequel le module de haut-parleur (330) est disposé dans le deuxième support (332), et
dans lequel le deuxième moteur de vibration (320) est configuré pour fournir une vibration dans une direction perpendiculaire à une surface du deuxième boîtier (220) sur lequel le deuxième moteur de vibration (320) est disposé.

8. Dispositif électronique (101, 200) de l'une quelconque des revendications précédentes,
dans lequel le deuxième boîtier (220) comprend un trou de connecteur(340) disposé plus près d'une quatrième périphérie (225) d'une troisième périphérie (224) et de la quatrième périphérie (225) du deuxième boîtier (220) parallèlement à la première direction, et pour connecter un connecteur d'un dispositif électronique externe (102, 104), et
dans lequel le deuxième moteur de vibration (320) est disposé à proximité de la troisième périphérie (224) de la troisième périphérie (224) et de la quatrième périphérie (225).

9. Dispositif électronique (101, 200) de l'une quelconque des revendications précédentes, comprenant en outre :
au moins un premier capteur (351) couplé de manière opérationnelle à l'au moins un processeur (120) et permettant d'identifier (1203) une prise d'un utilisateur sur le premier boîtier (210) et le deuxième boîtier (220), et
dans lequel l'au moins un processeur (120) est configuré pour :
identifier (1203) la prise sur le premier boîtier (210) ou sur le deuxième boîtier (220) par l'intermédiaire de l'au moins un premier capteur (351),
fournir (1205) une notification haptique par l'intermédiaire du premier moteur de vibration (310) en réponse à l'identification de la prise sur le premier boîtier (210) par l'intermédiaire de l'au moins un premier capteur (351), et
fournir (1205) une notification haptique par l'intermédiaire du deuxième moteur de vibration (320) en réponse à l'identification de la prise sur le deuxième boîtier (220) par l'intermédiaire de l'au moins un premier capteur (351).

10. Dispositif électronique (101, 200) de la revendication 9,
dans lequel l'au moins un processeur (120) est configuré pour fournir une notification haptique pour notifier l'événement à travers un moteur de vibration du premier moteur de vibration (310) et du deuxième moteur de vibration (320) en réponse à la non-identification de la prise sur le premier boîtier (210) et le deuxième boîtier (220) à travers l'au moins un premier capteur (351), et
dans lequel le moteur de vibration est configuré pour fournir une vibration dans une direction perpendiculaire à une surface sur laquelle le moteur de vibration est disposé.

11. Dispositif électronique (101, 200) de la revendication 9 ou 10, comprenant en outre
au moins un deuxième capteur (352) couplé de manière opérationnelle à l'au moins un processeur (120) et permettant de détecter un déplacement de position du dispositif électronique (101, 200), et
dans lequel l'au moins un processeur (120) est configuré pour fournir (1209) la notification haptique d'un modèle de vibration spécifié à travers le premier moteur de vibration (310) et le deuxième moteur de vibration (320), en réponse à l'identification du fait que le dispositif électronique (101, 200) se déplace à travers l'au moins un deuxième capteur (352) et à la non-identification de la prise sur le premier boîtier (351) et sur le deuxième boîtier (220) par l'intermédiaire de l'au moins un premier capteur (351).

12. Dispositif électronique (101, 200) de la revendication 11,
dans lequel le modèle de vibration spécifié est un modèle dans lequel le premier moteur de vibration (310) et le deuxième moteur de vibration (320) sont opérés simultanément ou un modèle dans lequel le premier moteur de vibration (310) et le deuxième moteur de vibration (320) sont opérés alternativement.

13. Dispositif électronique (101, 200) de l'une quelconque des revendications précédentes, comprenant en outre :
au moins un troisième capteur (353) couplé de manière opérationnelle à l'au moins un processeur (120) et permettant d'identifier une distance de déplacement du deuxième boîtier (220), et.
dans lequel l'au moins un processeur (120) est configuré pour :
identifier (1401) la distance de déplacement du deuxième boîtier (220) par l'intermédiaire de l'au moins un troisième capteur (353), et
ajuster l'intensité de la vibration du deuxième moteur de vibration (320) en se basant sur la distance de mouvement identifiée.

14. Dispositif électronique (101, 200) de la revendication 13,
dans lequel l'au moins un processeur (120) est configuré pour :
ajuster (1405) une intensité de vibration du deuxième moteur de vibration (320) pour qu'elle soit inférieure (15) ou égale à une première valeur en réponse à l'identification que la distance de mouvement identifiée est inférieure (15) à une première distance,
ajuster (1409) une intensité de vibration du deuxième moteur de vibration (320) pour qu'elle soit inférieure (15) ou égale à une deuxième valeur et supérieure à la première valeur en réponse à l'identification du fait que la distance de mouvement identifiée est supérieure à la première distance et inférieure (15) à la deuxième distance, et
ajuster (1411) une intensité de vibration du deuxième moteur de vibration (320) pour qu'elle soit inférieure (15) ou égale à une troisième valeur et supérieure à la deuxième valeur en réponse à l'identification du fait que la distance de mouvement identifiée est supérieure à la deuxième distance.

15. Dispositif électronique (101, 200) de l'une quelconque des revendications précédentes,
dans lequel l'au moins un processeur (120) est configuré pour :
fournir la notification haptique par l'intermédiaire d'un moteur de vibration du premier moteur de vibration (310) et du deuxième moteur de vibration (320) dans un premier état dans lequel le deuxième boîtier (220) est mobile dans la première direction de la première direction et de la deuxième direction par rapport au premier boîtier (210), et
fournir la notification haptique par l'intermédiaire du premier moteur de vibration (310) et du deuxième moteur de vibration (320) dans un deuxième état dans lequel le deuxième boîtier (220) est mobile dans la deuxième direction de la première direction et de la deuxième direction par rapport au premier boîtier (210).
